# EUROPEAN PATENT SPECIFICATION

(11) **EP 3 467 846 B1**
(45) Date of publication and mention of the grant of the patent: **03.06.2020**
(21) Application number: 17802620.9
(22) Date of filing: 16.05.2017
(51) Int. Cl.: H01M 10/0562, H01M 10/0525, H01B 1/06, H01B 1/10, H01M 4/13, H01M 4/62

(54) **SOLID ELECTROLYTE COMPOSITION, SOLID ELECTROLYTE-CONTAINING SHEET AS WELL AS METHOD FOR MANUFACTURING THE SAME, AND ALL-SOLID-STATE SECONDARY BATTERY AS WELL AS METHOD FOR MANUFACTURING THE SAME**
FESTELEKTROLYTZUSAMMENSETZUNG, FESTELEKTROLYTHALTIGES BLATT SOWIE VERFAHREN ZUR HERSTELLUNG DESSELBEN, UND FESTKÖRPERSEKUNDÄRBATTERIE SOWIE VERFAHREN ZUR HERSTELLUNG DERSELBEN
COMPOSITION D'ÉLECTROLYTE SOLIDE, FEUILLE COMPRENANT UN ÉLECTROLYTE SOLIDE AINSI QUE SON PROCÉDÉ DE FABRICATION, ET BATTERIE SECONDAIRE ENTIÈREMENT SOLIDE AINSI QUE SON PROCÉDÉ DE FABRICATION

(30) Priority: 23.05.2016 JP 2016102287; 11.05.2017 JP 2017094610
(43) Date of publication of application: 10.04.2019
(73) Proprietor: FUJIFILM Corporation, Tokyo 106-8620 (JP)
(72) Inventor: MAKINO, Masaomi, Ashigarakami-gun Kanagawa 258-8577 (JP); MOCHIZUKI, Hiroaki, Ashigarakami-gun Kanagawa 258-8577 (JP); MIMURA, Tomonori, Ashigarakami-gun Kanagawa 258-8577 (JP)
(74) Representative: Hoffmann Eitle
(86) International application number: PCT/JP2017/018288
(87) International publication number: WO 2017/204028

(56) References cited:
- WO-A1-2013/146916
- WO-A1-2015/122290
- WO-A1-2015/129704
- JP-A- 2010 146 823
- JP-A- 2015 088 486
- US-A1- 2011 049 745
- US-A1- 2014 127 579

## Description

### BACKGROUND OF THE INVENTION

### 1. Field of the Invention

The present invention relates to a solid electrolyte composition, a solid electrolyte-containing sheet, an all-solid state secondary battery, and methods for manufacturing a solid electrolyte-containing sheet and an all-solid state secondary battery.

### 2. Description of the Related Art

A lithium ion secondary battery is a storage battery which has a negative electrode, a positive electrode and an electrolyte sandwiched between the negative electrode and the positive electrode and enables charging and discharging by the reciprocal migration of lithium ions between both electrodes. In the related art, in lithium ion secondary batteries, an organic electrolytic solution has been used as the electrolyte. However, in organic electrolytic solutions, liquid leakage is likely to occur, there is a concern that a short circuit and ignition may be caused in batteries due to overcharging or overdischarging, and there is a demand for additional improvement in reliability and safety.

Under such circumstances, all-solid state secondary batteries in which an inorganic solid electrolyte is used instead of the organic electrolytic solution are attracting attention. In all-solid state secondary batteries, all of the negative electrode, the electrolyte, and the positive electrode are solid, safety and reliability which are considered as a problem of batteries in which the organic electrolytic solution is used can be significantly improved, and it also becomes possible to extend service lives. Furthermore, all-solid state secondary batteries can be provided with a structure in which the electrodes and the electrolyte are directly disposed in series. Therefore, it becomes possible to increase the energy density to be higher than that of secondary batteries in which the organic electrolytic solution is used, and the application to electric vehicles, large-sized storage batteries, and the like is anticipated.

Due to the respective advantages described above, development of all-solid state secondary batteries is underway as next-generation lithium ion batteries. In all-solid state secondary batteries, generally, any layer of an active material layer of the negative electrode, a solid electrolyte layer, and an active material layer of the positive electrode is formed using a material containing an inorganic solid electrolyte and/or an active material and a binder (binding agent) such as a specific high-molecular-weight compound. For example, JP2011-076792A describes that a solid electrolyte layer of an all-solid state secondary battery is provided with a constitution containing a specific sulfide solid electrolyte material and a hydrophobic polymer, and thus a battery resistance is decreased. In addition, JP2013-008611A discloses that an inorganic solid electrolyte and a binding agent made of a particulate polymer containing a surfactant having a polyoxyethylene chain are used in combination in layers constituting an all-solid state secondary battery, whereby it is possible to enhance the binding property between particles in the layers, and an all-solid state secondary battery having excellent rate characteristics is obtained.

WO 2015/129704 A1 relates to a solid electrolyte composition containing an inorganic solid electrolyte, a binder comprising core/shell-type particles having a core part and a shell part, and a dispersion medium, wherein the difference between the glass transition temperature of a polymer compound constituting the core part and the glass transition temperature of a polymer compound constituting the shell part is at least 50°C.

US 2014/127579 A1 relates to an all-solid state secondary cell which has a positive electrode active material layer, negative electrode active material layer, and solid electrolyte layer, wherein at least one of said positive electrode active material layer, said negative electrode active material layer, and said solid electrolyte layer includes an inorganic solid electrolyte and a binder comprised of an average particle size 30 to 300 nm particulate-shaped polymer and said particulate-shaped polymer is present in said positive electrode active material layer, said negative electrode active material layer, and said solid electrolyte layer in a state holding the particulate state.

US 2011/049745 A1 describes a manufacturing method for a solid electrolyte sheet that includes applying slurry, which contains sulfide-based solid electrolyte powder, a sulfur-containing compound and a solvent, onto a base; and forming the slurry into a sheet.

JP 2010 146823 A describes a composition for solid electrolyte sheet that is made by dispersing a solid electrolyte and a binder in a dispersion medium containing a fluorine-based solvent. The solid electrolyte sheet is obtained by coating and heat-treating the composition for solid electrolyte sheet on a sheet substrate. The solid secondary battery has a positive electrode, a negative electrode, and a solid electrolyte layer pinched between the positive electrode and the negative electrode, and the solid electrolyte layer is manufactured with the solid electrolyte sheet.

WO 2013/146916 A1 describes an electrode for all-solid-state secondary batteries, which comprises a collector, a conductive adhesive layer and an electrode mixture layer. The electrode mixture layer contains a binder, an inorganic solid electrolyte that contains sulfur atoms, and an electrode active material. The conductive adhesive layer contains conductive particles and a binder for adhesive layers, said binder being composed of a diene polymer. The diene polymer contains 10-75% by mass of a diene monomer unit, and has an iodine number of 5-350 mg/100 mg. The sulfur atoms contained in the inorganic solid electrolyte and carbon-carbon double bonds of the diene polymer are crosslinked with each other.

WO 2015/122290 A1 describes a solid electrolyte composition that contains nonspherical polymer particles, a dispersion medium, and an inorganic solid electrolyte, wherein the nonspherical polymer particles are composed of a polymer having at least one of: a specified functional group; an acidic group having an acid dissociation constant of pKa 14 or less; or a basic group having a conjugate acid pKa of 14 or less.

### SUMMARY OF THE INVENTION

In recent years, active development for putting all-solid state secondary batteries into practical use has been underway, and a demand for the performance improvement of all-solid state secondary batteries has been gradually intensifying. As a result of repeating studies regarding a relationship between the physical properties of a composition including an inorganic solid electrolyte that is used to form individual layers of an all-solid state secondary battery (solid electrolyte composition) and the improvement in performance or quality of an all-solid state secondary battery to be obtained, the present inventors found that not only the dispersion stability of the solid electrolyte composition but also the control of a viscosity of the solid electrolyte composition are capable of affecting the battery voltage of an all-solid state secondary battery to be obtained and the prevention of the generation of defects.

An object of the present invention is to provide a solid electrolyte composition which is capable of sufficiently increasing the battery voltage of an all-solid state secondary battery to be obtained in the case of being used as a layer-constituting material of the all-solid state secondary battery and further prevents the easy occurrence of a short circuit or the like by increasing layer thickness uniformity. In addition, another object of the present invention is to provide a solid electrolyte-containing sheet which has a uniform layer thickness, also has excellent ion conductivity, and is capable of effectively increasing the battery voltage in the case of being used in an all-solid state secondary battery and an all-solid state secondary battery in which the sheet is used. Still another object of the present invention is to provide a method for manufacturing the solid electrolyte-containing sheet and a method for manufacturing the all-solid state secondary battery respectively.

As a result of intensive studies in consideration of the above-described objects, the present inventors found a fact that a solid electrolyte composition containing a dispersion medium that has a specific chemical structure and has a boiling point at normal pressure in a predetermined range, a specific inorganic solid electrolyte, and a binder is excellent in terms of dispersion stability and has a viscosity preferable for the manufacturing of batteries, a fact that, in a case in which a layer is formed using the solid electrolyte composition, it is possible to make the layer thickness more uniform, and a fact that an all-solid state secondary battery having this layer exhibits a sufficiently high battery voltage. The present invention was completed by repeating additional studies on the basis of the above-described finding.

That is, the above-described objects are achieved by the following means.
(1) A solid electrolyte composition comprising: an inorganic solid electrolyte (A) having conductivity of ions of metals belonging to Group I or II of the periodic table; a binder (B); and a dispersion medium (C), in which the dispersion medium (C) includes an alicyclic compound (C1) optionally comprising halogen atoms and not comprising any other heteroatoms, and a boiling point of the alicyclic compound (C1) at 760 mmHg is 110°C or higher and 180°C or lower.
(2) The solid electrolyte composition according to (1), in which the alicyclic compound (C1) includes no unsaturated bond in a ring and has a monocyclic shape.
(3) The solid electrolyte composition according to (1) or (2), in which the alicyclic compound (C1) has at least one selected from the group consisting of an alkyl group, an alkenyl group, and an alkynyl group each having 2 or more carbon atoms, and a halogen atom, and
   wherein the alicyclic compound (C1) preferably is a compound of a six to eight-membered ring.
(4) The solid electrolyte composition according to any one of (1) to (3), in which a proportion of the alicyclic compound (C1) in the dispersion medium (C) is 20% by mass to 100% by mass.
(5) The solid electrolyte composition according to any one of (1) to (4), in which the inorganic solid electrolyte (A) is a sulfide-based inorganic solid electrolyte.
(6) The solid electrolyte composition according to any one of (1) to (5), in which the binder (B) is at least one selected from the group consisting of an acrylic resin, a polyurethane resin, a polyurea resin, a polyimide resin, a fluorine-containing resin, and a hydrocarbon-based thermoplastic resin, and
   wherein the binder (B) preferably has a polar group.
(7) The solid electrolyte composition according to any one of (1) to (6), in which the binder (B) is particles insoluble in the dispersion medium (C), and
   wherein the binder (B) is preferably nanoparticles having an average particle diameter of 10 to 1,000 nm.
(8) The solid electrolyte composition according to any one of (1) to (7), further comprising: an active material (D).
(9) The solid electrolyte composition according to any one of (1) to (8), further comprising: a conductive auxiliary agent.
(10) The solid electrolyte composition according to any one of (1) to (9), further comprising: a lithium salt.
(11) The solid electrolyte composition according to any one of (1) to (10), further comprising: an ionic liquid.
(12) A solid electrolyte-containing sheet comprising: an inorganic solid electrolyte (A) having conductivity of ions of metals belonging to Group I or II of the periodic table; a binder (B); and 1 ppm or more and 10,000 ppm or less of a dispersion medium (C) in a total mass, in which the dispersion medium (C) includes an alicyclic compound (C1) optionally comprising halogen atoms and not comprising any other heteroatoms, and a boiling point of the alicyclic compound (C1) at 760 mmHg is 110°C or higher and 180°C or lower.
(13) A method for manufacturing a solid electrolyte-containing sheet, comprising: a step of applying the solid electrolyte composition according to any one of (1) to (11) onto a base material and forming a coated film.
(14) An all-solid state secondary battery comprising: a positive electrode active material layer; a negative electrode active material layer; and a solid electrolyte layer, in which at least one of the positive electrode active material layer, the negative electrode active material layer, or the solid electrolyte layer is the solid electrolyte-containing sheet according to (12).
(15) A method for manufacturing an all-solid state secondary battery, in which the all-solid state secondary battery is manufactured using the manufacturing method according to (13).

In the present specification, numerical ranges expressed using "to" include numerical values before and after the "to" as the lower limit value and the upper limit value.

In the present specification, "acrylic" or "(meth)acrylic" that is simply expressed is used to refer to methacrylic and/or acrylic. In addition, "acryloyl" or "(meth)acryloyl" that is simply expressed is used to refer to methacryloyl and/or acryloyl.

In the present specification, in a case in which there is a plurality of substituents, linking groups, and the like (hereinafter, referred to as substituents and the like) represented by a specific reference sign or a case in which a plurality of substituents and the like is simultaneously or selectively regulated, it means that the respective substituents and the like may be identical to or different from one another. What has been described above is also true for the regulation of the number of substituents and the like.

In the present specification, a mass-average molecular weight (Mw) can be measured as a polystyrene-equivalent molecular weight by means of GPC unless particularly otherwise described. At this time, a GPC apparatus HLC-8220 (manufactured by Tosoh Corporation) is used, G3000HXL+G2000HXL is used as a column, a flow rate at 23°C is 1 mL/min, and the molecular weight is detected by RI. An eluent can be selected from tetrahydrofuran (THF), chloroform, N-methyl-2-pyrrolidone (NMP), and m-cresol/chloroform (manufactured by Shonanwako Junyaku KK), and THF is used in a case in which a subject needs to be dissolved.

The solid electrolyte composition of the present invention is excellent in terms of dispersion stability and has a viscosity preferable for the manufacturing of batteries. The solid electrolyte-containing sheet of the present invention has a highly uniform layer thickness and is also excellent in terms of ion conductivity. In addition, the all-solid state secondary battery of the present invention is capable of realizing a sufficiently high battery voltage.

In addition, according to the manufacturing methods of the present invention, it is possible to preferably manufacture a solid electrolyte-containing sheet and an all-solid state secondary battery respectively which have the above-described excellent characteristics or performance.

The above-described and other characteristics and advantages of the present invention will be further clarified by the following description with appropriate reference to the accompanying drawings.

### BRIEF DESCRIPTION OF THE DRAWINGS

Fig. 1 is a vertical cross-sectional view schematically illustrating an all-solid state secondary battery according to a preferred embodiment of the present invention.
Fig. 2 is a vertical cross-sectional view schematically illustrating a testing device used in examples.
Fig. 3 is a vertical cross-sectional view schematically illustrating an all-solid state secondary battery (coin battery) produced in examples.

### DESCRIPTION OF THE PREFERRED EMBODIMENTS

### <Preferred embodiment>

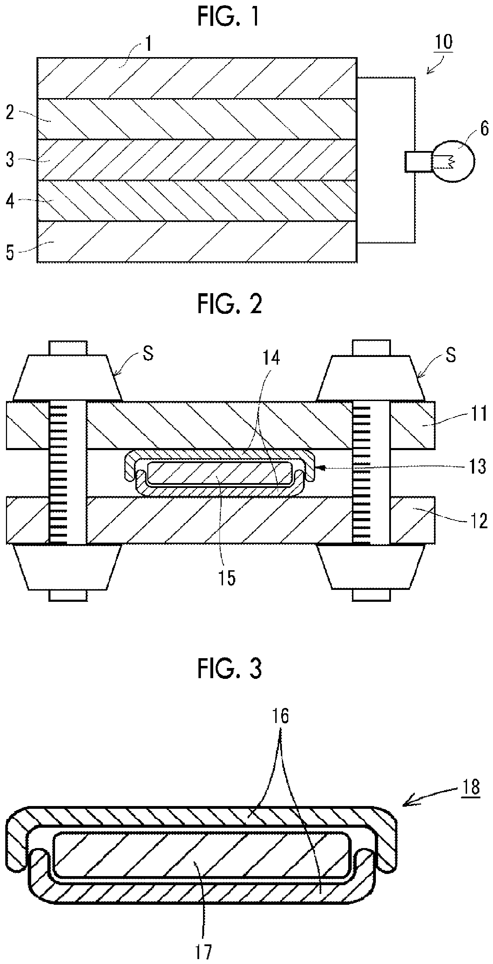

Fig. 1 is a cross-sectional view schematically illustrating an all-solid state secondary battery (lithium ion secondary battery) according to a preferred embodiment of the present invention. In the case of being seen from the negative electrode side, an all-solid state secondary battery 10 of the present embodiment has a negative electrode collector 1, a negative electrode active material layer 2, a solid electrolyte layer 3, a positive electrode active material layer 4, and a positive electrode collector 5 in this order. The respective layers are in contact with one another and have a laminated structure. In a case in which the above-described structure is employed, during charging, electrons (e⁻) are supplied to the negative electrode side, and lithium ions (Li⁺) are accumulated on the negative electrode side. On the other hand, during discharging, the lithium ions (Li⁺) accumulated on the negative electrode side return to the positive electrode, and electrons are supplied to an operation portion 6. In an example illustrated in the drawing, an electric bulb is employed as the operation portion 6 and is lit by discharging. A solid electrolyte composition of the present invention can be preferably used as a material used to shape the negative electrode active material layer, the positive electrode active material layer, and the solid electrolyte layer. In addition, a solid electrolyte-containing sheet of the present invention is preferred as the negative electrode active material layer, the positive electrode active material layer, and the solid electrolyte layer.

In the present specification, the positive electrode active material layer (hereinafter, also referred to as the positive electrode layer) and the negative electrode active material layer (hereinafter, also referred to as the negative electrode layer) will be collectively referred to as the electrode layer or the active material layer in some cases.

Meanwhile, in a case in which an all-solid state secondary battery having the layer constitution illustrated in Fig. 1 is put into a 2032-type coin case, the all-solid state secondary battery having the layer constitution illustrated in Fig. 1 will be referred to as an electrode sheet for an all-solid state secondary battery, and a battery produced by putting this electrode sheet for an all-solid state secondary battery into a 2032-type coin case will be referred to as an all-solid state secondary battery, whereby the electrode sheet for an all-solid state secondary battery and the all-solid state secondary battery will be differentiated in some cases.

The thicknesses of the positive electrode active material layer 4, the solid electrolyte layer 3, and the negative electrode active material layer 2 are not particularly limited. Meanwhile, in a case in which the dimensions of ordinary batteries are taken into account, the thicknesses are preferably 10 to 1,000 µm and more preferably 20 µm or more and less than 500 µm. In the all-solid state secondary battery of the present invention, the thickness of at least one layer of the positive electrode active material layer 4, the solid electrolyte layer 3, or the negative electrode active material layer 2 is still more preferably 50 µm or more and less than 500 µm.

### <Solid electrolyte composition>

The solid electrolyte composition of the present invention contains an inorganic solid electrolyte (A) having conductivity of ions of metals belonging to Group I or II of the periodic table; a binder (B); and a dispersion medium (C). The dispersion medium (C) includes an alicyclic compound (C1), and a boiling point of the alicyclic compound (C1) at 760 mmHg is 100°C or higher and 180°C or lower.

Hereinafter, the inorganic solid electrolyte (A), the binder (B), and the dispersion medium (C) will be respectively referred to as the inorganic solid electrolyte, the binder, and the dispersion medium in some cases.

### (Inorganic solid electrolyte (A))

The inorganic solid electrolyte is an inorganic solid electrolyte, and the solid electrolyte refers to a solid-form electrolyte capable of migrating ions therein. The inorganic solid electrolyte is clearly differentiated from organic solid electrolytes (high-molecular-weight electrolytes represented by polyethylene oxide (PEO) or the like and organic electrolyte salts represented by lithium bis(trifluoromethanesulfonyl)imide (LiTFSI)) since the inorganic solid electrolyte does not include any organic substances as a principal ion-conductive material. In addition, the inorganic solid electrolyte is a solid in a static state and is thus, generally, not disassociated or liberated into cations and anions. Due to this fact, the inorganic solid electrolyte is also clearly differentiated from inorganic electrolyte salts of which cations and anions are disassociated or liberated in electrolytic solutions or polymers (LiPF₆, LiBF₄, LiFSI, LiCl, and the like). The inorganic solid electrolyte is not particularly limited as long as the inorganic solid electrolyte has conductivity of ions of metals belonging to Group I or II of the periodic table and is generally a substance not having electron conductivity.

In the present invention, the inorganic solid electrolyte has conductivity of ions of metals belonging to Group I or II of the periodic table. As the inorganic solid electrolyte, it is possible to appropriately select and use solid electrolyte materials that are applied to this kind of products. Typical examples of the inorganic solid electrolyte include (i) sulfide-based inorganic solid electrolytes and (ii) oxide-based inorganic solid electrolytes. In the present invention, the sulfide-based inorganic solid electrolytes are preferably used since it is possible to form a more favorable interface between the active material and the inorganic solid electrolyte.

### (i) Sulfide-based inorganic solid electrolytes

Sulfide-based inorganic solid electrolytes are preferably inorganic solid electrolytes which contain sulfur atoms (S), have ion conductivity of metals belonging to Group I or II of the periodic table, and have electron-insulating properties. The sulfide-based inorganic solid electrolytes are preferably inorganic solid electrolytes which, as elements, contain at least Li, S, and P and have a lithium ion conductivity, but the sulfide-based inorganic solid electrolytes may also include elements other than Li, S, and P depending on the purposes or cases.

Examples thereof include lithium ion-conductive inorganic solid electrolytes satisfying a composition represented by Formula (1).

Lₐ₁M_{b1}P_{c1}S_{d1}Aₑ₁ Formula (1)

In the formula, L represents an element selected from Li, Na, and K and is preferably Li. M represents an element selected from B, Zn, Sn, Si, Cu, Ga, Sb, Al, and Ge. A represents an element selected from I, Br, Cl, and F. a1 to e1 represent the compositional ratios among the respective elements, and a1:b1:c1:d1:e1 satisfies 1 to 12:0 to 5:1:2 to 12:0 to 10. Furthermore, a1 is preferably 1 to 9 and more preferably 1.5 to 7.5. b1 is preferably 0 to 3. Furthermore, d1 is preferably 2.5 to 10 and more preferably 3.0 to 8.5. Furthermore, e1 is preferably 0 to 5 and more preferably 0 to 3.

The compositional ratios among the respective elements can be controlled by adjusting the amounts of raw material compounds blended to manufacture the sulfide-based solid electrolyte as described below.

The sulfide-based inorganic solid electrolytes may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two raw materials of, for example, lithium sulfide (Li₂S), phosphorus sulfide (for example, diphosphorus pentasulfide (P₂S₅)), a phosphorus single body, a sulfur single body, sodium sulfide, hydrogen sulfide, lithium halides (for example, LiI, LiBr, and LiCl), or sulfides of an element represented by M (for example, SiS₂, SnS, and GeS₂).

The ratio between Li₂S and P₂S₅ in Li-P-S-based glass and Li-P-S-based glass ceramic is preferably 60:40 to 90:10 and more preferably 68:32 to 78:22 in terms of the molar ratio between Li₂S:P₂S₅. In a case in which the ratio between Li₂S and P₂S₅ is set in the above-described range, it is possible to increase the lithium ion conductivity. Specifically, the lithium ion conductivity can be preferably set to 1×10⁻⁴ S/cm or more and more preferably set to 1×10⁻³ S/cm or more. The upper limit is not particularly limited, but realistically 1×10⁻¹ S/cm or less.

As specific examples of the sulfide-based inorganic solid electrolytes, combination examples of raw materials will be described below. Examples thereof include Li₂S-P₂S₅, Li₂S-P₂S₅-LiCl, Li₂S-P₂S₅-H₂S, Li₂S-P₂S₅-H₂S-LiCl, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, Li₁₀GeP₂S₁₂, and the like. Mixing ratios of the respective raw materials do not matter. Examples of a method for synthesizing sulfide-based inorganic solid electrolyte materials using the above-described raw material compositions include an amorphorization method. Examples of the amorphorization method include a mechanical milling method, a solution method, and a melting quenching method. This is because treatments at normal temperature become possible, and it is possible to simplify manufacturing steps.

### (ii) Oxide-based inorganic solid electrolytes

Oxide-based inorganic solid electrolytes are preferably compounds which contain oxygen atoms (O), have an ion conductivity of metals belonging to Group I or II of the periodic table, and have electron-insulating properties.

Specific examples of the compounds include LiₓₐLa_{ya}TiO₃ [xa=0.3 to 0.7 and ya=0.3 to 0.7] (LLT), Li_{xb}La_{yb}Zr_{zb}M^{bb}_{mb}O_{nb} (M^{bb} is at least one element of Al, Mg, Ca, Sr, V, Nb, Ta, Ti, Ge, In or Sn, xb satisfies 5≤xb≤10, yb satisfies 1≤yb≤4, zb satisfies 1≤zb≤4, mb satisfies 0≤mb≤2, and nb satisfies 5≤nb≤20.), Li_{xc}B_{yc}M^{cc}_{zc}O_{nc} (M^{cc} is at least one element of C, S, Al, Si, Ga, Ge, In, or Sn, xc satisfies 0≤xc≤5, yc satisfies 0≤yc≤1, zc satisfies 0≤zc≤1, and nc satisfies 0≤nc≤6), Li_{xd}(Al, Ga)_{yd}(Ti, Ge)_{zd}Si_{ad}P_{md}O_{nd} (1≤xd≤3, 0≤yd≤1, 0≤zd≤2, 0≤ad≤1, 1≤md≤7, 3≤nd≤13), Li₍₃₋₂ₓₑ₎M^{ee}ₓₑD^{ee}O (xe represents a number of 0 or more and 0.1 or less, and M^{ee} represents a divalent metal atom. D^{ee} represents a halogen atom or a combination of two or more halogen atoms.), Li_{xf}Si_{yf}O_{zf} (1≤xf≤5, 0≤yf≤3, 1≤zf≤10), Li_{xg}S_{yg}O_{zg} (1≤xg≤3, 0<yg≤2, 1≤zg≤10), Li₃BO₃-Li₂SO₄, Li₂O-B₂O₃-P₂O₅, Li₂O-SiO₂, Li₆BaLa₂Ta₂O₁₂, Li₃PO(_{4-3/2w)}N_{w} (w satisfies w<1), Li_{3.5}Zn_{0.25}GeO₄ having a lithium super ionic conductor (LISICON)-type crystal structure, La_{0.55}Li_{0.35}TiO₃ having a perovskite-type crystal structure, LiTi₂P₃O₁₂ having a natrium super ionic conductor (NASICON)-type crystal structure, Li_{1+xh+yh}(Al, Ga)ₓₕ(Ti, Ge)₂₋ₓₕSi_{yh}P_{3-yh}O₁₂ (0≤xh≤1, 0≤yh≤1), Li₇La₃Zr₂O₁₂ (LLZ) having a garnet-type crystal structure. In addition, phosphorus compounds containing Li, P and O are also desirable. Examples thereof include lithium phosphate (Li₃PO₄), LiPON in which some of oxygen atoms in lithium phosphate are substituted with nitrogen, LiPOD¹ (D¹ is at least one element selected from Ti, V, Cr, Mn, Fe, Co, Ni, Cu, Zr, Nb, Mo, Ru, Ag, Ta, W, Pt, Au, or the like), and the like. It is also possible to preferably use LiA¹ON (A¹ represents at least one element selected from Si, B, Ge, Al, C, Ga, or the like) and the like.

The shape of the inorganic solid electrolyte before being added to the solid electrolyte composition is not particularly limited, but is preferably a particle shape. The volume-average particle diameter of the inorganic solid electrolyte before being added to the solid electrolyte composition is not particularly limited, but is preferably 0.01 µm or more and more preferably 0.1 µm or more. The upper limit is preferably 100 µm or less and more preferably 50 µm or less.

Meanwhile, the volume-average particle diameter of the inorganic solid electrolyte particles being added to the solid electrolyte composition can be computed using a method described in the following section of examples.

The shape of the inorganic solid electrolyte in the solid electrolyte composition is not particularly limited, but is preferably a particle shape.

The volume-average particle diameter of the inorganic solid electrolyte in the solid electrolyte composition is not particularly limited, but is preferably small. This is because, in the all-solid state secondary battery, as the volume-average particle diameter of the inorganic solid electrolyte decreases, the surface contact area between the inorganic solid electrolyte and the active material increases, and consequently, it is easier for lithium ions to migrate in the respective layers constituting the all-solid state secondary battery and between the respective layers. The lower limit of the volume-average particle diameter of the inorganic solid electrolyte is practically 0.1 µm or more. On the other hand, in a case in which the surface contact area between the inorganic solid electrolyte and the active material is taken into account, the upper limit of the volume-average particle diameter of the inorganic solid electrolyte is preferably 10 µm or less, more preferably 5 µm or less, and particularly preferably 2 µm or less.

Meanwhile, the volume-average particle diameter of the inorganic solid electrolyte in the solid electrolyte composition can be computed using a method described in the section of examples described below.

In a case in which a decrease in the interface resistance and the maintenance of the decreased interface resistance in the case of being used in the all-solid state secondary battery are taken into account, the content of the inorganic solid electrolyte in the solid component of the solid electrolyte composition is preferably 5% by mass or more, more preferably 10% by mass or more, and particularly preferably 20% by mass or more with respect to 100% by mass of the solid components. From the same viewpoint, the upper limit is preferably 99.9% by mass or less, more preferably 99.5% by mass or less, and particularly preferably 99% by mass or less.

These inorganic solid electrolytes may be used singly or two or more inorganic solid electrolytes may be used in combination.

Meanwhile, the solid content in the present specification refers to a component that does not volatilize or evaporate and thus disappear in the case of being subjected to a drying treatment in a nitrogen atmosphere at 170°C for six hours. Typically, the solid content refers to a component other than a dispersion medium described below.

### (Binder (B))

The solid electrolyte composition of the present invention contains the binder (B).

A binder that is used in the present invention is not particularly limited as long as the binder is an organic polymer.

A binder that can be used in the present invention is not particularly limited, and, for example, binders made of a resin described below are preferred.

Examples of fluorine-containing resins include polytetrafluoroethylene (PTFE), polyvinylidene difluoride (PVdF), and copolymers of polyvinylidene difluoride and hexafluoropropylene (PVdF-HFP).

Examples of hydrocarbon-based thermoplastic resins include polyethylene, polypropylene, styrene butadiene rubber (SBR), hydrogenated styrene butadiene rubber (HSBR), butylene rubber, acrylonitrile butadiene rubber, polybutadiene, polyisoprene, polyisoprene latex, and the like.

Examples of acrylic resins include a variety of (meth)acrylic monomers, (meth)acrylic amide monomers, and copolymers of monomers constituting these resins (preferably copolymers of acrylic acid and methyl acrylate).

In addition, copolymers with other vinyl-based monomers are also preferably used. Examples thereof include copolymers of methyl (meth)acrylate and styrene, copolymers of methyl (meth)acrylate and acrylonitrile, and copolymers of butyl (meth)acrylate, acrylonitrile, and styrene. In the specification of the present application, a copolymer may be any one of a statistic copolymer, a periodic copolymer, a blocked copolymer, and a graft copolymer, and a blocked copolymer is preferred.

Examples of other resins include a polyurethane resin, a polyurea resin, a polyamide resin, a polyimide resin, a polyester resin, a polyether resin, a polycarbonate resin, a cellulose derivative resin, and the like.

These binders may be used singly or two or more binders may be used in combination.

The binder that is used in the present invention is preferably at least one selected from the group consisting of the acrylic resin, the polyurethane resin, the polyurea resin, the polyimide resin, the fluorine-containing resin, and the hydrocarbon-based thermoplastic resin in order to further enhance the bonding property between the inorganic solid electrolyte particles and between the inorganic solid electrolyte particles and the active material particles.

The binder that is used in the present invention preferably has a polar group in order to enhance wettability or the adsorption property to particle surfaces. The polar group is preferably a monovalent group including a hetero atom, for example, a monovalent group including a structure in which any of an oxygen atom, a nitrogen atom, and a sulfur atom and a hydrogen atom are bonded together, and specific examples thereof include a carboxy group, a hydroxy group, an amino group, a phosphoric acid group, and a sulfo group.

The shape of the binder is not particularly limited and may be a particle shape or an irregular shape in the solid electrolyte composition, the solid electrolyte-containing sheet, or the all-solid state secondary battery.

In the present invention, the binder is preferably particles insoluble in the dispersion medium from the viewpoint of the dispersion stability of the solid electrolyte composition. Here, "the binder is particles insoluble in the dispersion medium" means that, even in a case in which the binder is added to the dispersion medium at 30°C and left to stand for 24 hours, the average particle diameter does not decrease by 5% or more, and the degree of the decrease in the average particle diameter is preferably 3% or more and more preferably 1% or more.

Meanwhile, in a state in which the binder particles are not dissolved in the dispersion medium, the degree of the average particle diameter changed with respect to that before the addition is 0%.

In addition, the binder in the solid electrolyte composition is preferably nanoparticles having an average particle diameter of 10 to 1,000 nm in order to suppress a decrease in the interparticle ion conductivity of the inorganic solid electrolyte.

The average particle diameter of the binder can be computed using a method described in the section of examples described below.

The binder may be one kind of compound or a combination of two or more kinds of compounds. In a case in which the binder is particles, the particles may have a core-shell shape or a hollow shape instead of a homogeneous dispersion. In addition, an organic substance or an inorganic substance may be included in a core portion that forms the inside of the binder. Examples of the organic substance included in the core portion include a dispersion medium, a dispersant, a lithium salt, an ion liquid, a conductive auxiliary agent, and the like which will be described below.

Meanwhile, as the binder that is used in the present invention, a commercially available product can be used. In addition, the binder can also be prepared using an ordinary method.

The moisture concentration of a polymer constituting the binder that is used in the present invention is preferably 100 ppm (mass-based) or less.

In addition, the polymer constituting the binder that is used in the present invention may be used in a solid state or may be used in a state of a polymer particle dispersion liquid or a polymer solution.

The mass-average molecular weight of the polymer constituting the binder that is used in the present invention is preferably 10,000 or more, more preferably 20,000 or more, and still more preferably 30,000 or more. The upper limit is preferably 1,000,000 or less, more preferably 200,000 or less, and still more preferably 100,000 or less.

In a case in which a favorable decreasing property of the interface resistance and the maintaining property thereof in the case of being used in the all-solid state secondary battery are taken into account, the content of the binder in the solid electrolyte composition is preferably 0.01% by mass or more, more preferably 0.1% by mass or more, and still more preferably 1% by mass or more with respect to 100% by mass of the solid components. From the viewpoint of battery characteristics, the upper limit is preferably 10% by mass or less, more preferably 5% by mass or less, and still more preferably 3% by mass or less.

In the present invention, the mass ratio of the total mass (total amount) of the inorganic solid electrolyte and the active material to the mass of the binder [(the mass of the inorganic solid electrolyte and the mass of the active material)/the mass of the binder] is preferably in a range of 1,000 to 1. Furthermore, this ratio is more preferably 500 to 2 and still more preferably 100 to 10.

### (Dispersion medium (C))

The dispersion medium of the present invention includes an alicyclic compound (C1). The alicyclic compound (C1) has a boiling point at normal pressure (760 mmHg) of 100°C or higher and 180°C or lower and is not particularly limited as long as the dispersion medium is a compound composed of a specific atom as described below.

The reason is not clear; however, in the present invention, in a case in which the dispersion medium includes the alicyclic compound (C1), the solid electrolyte composition that is a slurry is not only excellent in terms of dispersion stability but also has a viscosity preferable for the manufacturing of batteries. The positive electrode active material layer, the solid electrolyte layer, and the negative electrode active material layer can be formed to be uniform using the solid electrolyte composition of the present invention, and it is possible to remove a predetermined amount of the dispersion medium by drying at a low temperature. It is considered that, in the respective layers, a solid component is considered to be uniformly dispersed as in the solid electrolyte composition and contributes to the voltage improvement of the all-solid state secondary battery.

In addition, in the present invention, in the case of using the alicyclic compound, it is possible to disperse the inorganic solid electrolyte miniaturized in the solid electrolyte composition, and the solid electrolyte-containing sheet is excellent in terms of ion conductivity. The reason is not clear, but is assumed as described below. That is, it is considered that, in a case in which the dispersion medium includes the alicyclic compound, energy for miniaturizing the inorganic solid electrolyte (for example, in the case of using a ball mill, the rotation energy of a ball) is sufficiently transferred to the inorganic solid electrolyte during the preparation of the solid electrolyte composition, and thus it is possible to sufficiently miniaturize the inorganic solid electrolyte. Furthermore, it is considered that the inorganic solid electrolyte is stable with respect to the alicyclic compound, and thus the dissolution or decomposition of the inorganic solid electrolyte is suppressed, and it is possible to suppress a decrease in the ion conductivity to the minimum extent.

The lower limit of the boiling point of the alicyclic compound (C1) is 110°C or higher and preferably 120°C or higher. The upper limit is preferably 160°C or lower and more preferably 150°C or lower. In a case in which the boiling point at normal pressure is in the above-described range, the storage stability of the slurry and the manufacturing stability during coating are more favorable.

The alicyclic compound (C1) does not include hetero atoms except for a halogen atom. Atoms constituting the alicyclic compound (C1) that is used in the present invention are only a carbon atom and a hydrogen atom, only a carbon atom and a halogen atom, or only a carbon atom, a hydrogen atom, and a halogen atom, and thus the solubility of the inorganic solid electrolyte in the alicyclic compound (C1) is low, and a reaction with the inorganic solid electrolyte does not easily occur.

In the present invention, in order to more effectively suppress the deterioration of the inorganic solid electrolyte, the alicyclic compound (C1) preferably includes no unsaturated bond in a ring and has a monocyclic shape.

The alicyclic compound (C1) may or may not have a substituent. Examples of the substituent include substituents P described below. Among them, in order to obtain a slurry viscosity more preferable for coating manufacturing aptitude, the alicyclic compound (C1) preferably has at least one selected from the group consisting of an alkyl group (preferably an alkyl group having 2 or more carbon atoms), an alkenyl group, an alkynyl group, and a halogen atom and more preferably has at least one selected from the group consisting of an alkyl group and a halogen atom.

Among alkyl groups exemplified as the substituent P described below, an alkyl group having 2 to 6 carbon atoms is preferred, and the number of carbon atoms is more preferably 2 to 4.

Among alkenyl groups exemplified as the substituent P described below, an alkyl group having 2 to 6 carbon atoms is preferred, and the number of carbon atoms is more preferably 2 to 4.

Among alkynyl groups exemplified as the substituent P described below, an alkyl group having 2 to 6 carbon atoms is preferred, and the number of carbon atoms is more preferably 2 to 4.

Among halogen atoms exemplified as the substituent P described below, a chlorine atom is more preferred.

In addition, in the present invention, the substituent that the alicyclic compound (C1) has also preferably has a branched structure due to the ease of procurement.

In the present invention, in order to obtain a slurry viscosity more favorable for coating manufacturing aptitude, the alicyclic compound (C1) is preferably a compound of a six to eight-membered ring.

Specific examples of the alicyclic compound (C1) include the following compounds. However, the present invention is not limited thereto.

As unsubstituted compounds, cycloheptane (bp: 118°C; "bp" is an abbreviation of "boiling point", which shall apply below), cyclooctane (bp: 149°C), cyclononane (bp: 178°C), and the like.

As compounds having an alkyl group, 1,3,5-trimethylcyclohexane (bp: 140°C), ethylcyclohexane (bp: 131°C), propylcyclohexane (bp: 155°C), isopropylcyclohexane (bp: 155°C), 1-methyl-4-isopropylcyclohexane (bp: 171°C), isobutylcyclohexane (bp: 169°C), t-butylcyclohexane (bp: 167°C), butylcyclohexane (bp: 180°C), and the like are exemplified.

As compounds having an alkenyl group, vinylcyclohexane (bp: 121°C), and the like are exemplified.

As compounds having an alkynyl group, ethynylcyclohexane (bp: 118°C), and the like are exemplified.

As compounds having a halogen atom, chlorocyclopentane (bp: 114°C), bromocyclopentane (bp: 138°C), chlorocyclohexane (bp: 142°C), bromocyclohexane (bp: 166°C), chlorocycloheptane (bp: 175°C), and the like are exemplified.

As compounds having an unsaturated bond in the ring, 1-methyl-1-cyclohexene (bp: 110°C), 1-methyl-1,4-cyclohexadiene (bp: 115°C), vinyl cyclohexene (bp: 126°C), cyclooctene (bp: 145°C), cyclooctadiene (bp: 151°C), and the like are exemplified.

As polycyclic compounds (having two or more rings in one molecule), norbornane (bp: 106°C), camphene (bp: 159°C), 5-vinyl-2-norbornene (bp: 141°C), 5-ethylidene-2-norbornene (bp: 147°C), 5,6-dihydrodicyclopentadiene (bp: 180°C), and the like are exemplified.

The alicyclic compound (C1) may be used singly or two or more alicyclic compounds may be used in mixture.

The lower limit of the viscosity at 20°C of the alicyclic compound (C1) is preferably 0.7 mPa·s or more, more preferably 0.8 mPa·s or more, and particularly preferably 1.0 mPa·s or more. The upper limit is not particularly limited, but is preferably 10 mPa·s or less, more preferably 5.0 mPa·s or less, and particularly preferably 3.0 mPa·s or less.

This is because, in a case in which the viscosity is in the above-described range, the solid electrolyte composition that is a slurry is superior in terms of dispersion stability and is also superior in terms of the layer thickness uniformity of a layer that is obtained by applying the solid electrolyte composition to a base material.

Meanwhile, the lower limit of the viscosity at 20°C of the solid electrolyte composition of the present invention is preferably 30 mPa·s or more, more preferably 50 mPa·s or more, and particularly preferably 100 mPa·s or more. The upper limit is not particularly limited, but is preferably 10,000 mPa·s or less, more preferably 1,000 mPa·s or less, and particularly preferably 500 mPa·s or less.

The solid electrolyte composition may also contain a dispersion medium other than the alicyclic compound (C1) (an amide solvent, an amine solvent, an alcohol solvent (for example, methanol, ethanol, butanol, pentanol, or hexanol), an ether solvent (for example, diethoxyethane, dibutyl ether, tetraethylene glycol dimethyl ether (tetraglyme), triethylene glycol dimethyl ether (triglyme), tetraethylene glycol monomethyl ether, triethylene glycol monomethyl ether, tetraethylene glycol, or triethylene glycol), an ester solvent (for example, butyl butyrate or γ-butyrolactone), a carbonate solvent (for example, ethylene carbonate, dimethyl carbonate, or diethyl carbonate), a cyclic ether solvent, a ketone solvent (for example, methyl ethyl ketone), a sulfonyl-based solvent, a hydrocarbon solvent (for example, heptane or octane), a nitrile solvent (for example, acetonitrile), a halogen solvent, a heterocyclic solvent, an aromatic solvent, a nitro solvent, or the like) as long as the dispersion medium includes the alicyclic compound (C1) as the dispersion medium (C).

The content of the alicyclic compound (C1) in the dispersion medium is preferably 20% by mass or more, more preferably 50% by mass or more, still more preferably 80% by mass or more, and particularly preferably 95% by mass or more.

This is because, in a case in which the content is in the above-described range, the solid electrolyte composition that is a slurry is superior in terms of dispersion stability and is also superior in terms of the layer thickness uniformity of a layer that is obtained by applying the solid electrolyte composition to a base material.

A specific amount of the dispersion medium (C) included in the solid electrolyte composition is removed in a process for producing the solid electrolyte-containing sheet or the all-solid state secondary battery. As described below, the content of the dispersion medium (C) in the solid electrolyte-containing sheet of the present invention is 1 ppm or more and 10,000 ppm or less of the total mass. The upper limit of the content (mass-based) of the dispersion medium (C) in the solid electrolyte-containing sheet of the present invention is preferably 1,000 ppm or less and more preferably 500 ppm or less.

In the present invention, the content of the dispersion medium in the solid electrolyte composition can be appropriately set in consideration of the balance between the viscosity of the solid electrolyte composition and the drying load. Generally, the content of the dispersion medium in the solid electrolyte composition is preferably 20 to 99% by mass, more preferably 25 to 90% by mass, and particularly preferably 30 to 80 parts by mass.

In the present specification, compounds or groups that are not clearly expressed as substituted or unsubstituted may have an appropriate substituent in the compounds or groups. What has been described above shall also apply to compounds that are not clearly expressed as substituted or unsubstituted. Preferred examples of the substituent include the substituent P described below.

Examples of the substituent P include the following substituents:
an alkyl group (preferably an alkyl group having 1 to 20 carbon atoms, for example, methyl, ethyl, isopropyl, t-butyl, pentyl, heptyl, 1-ethylpentyl, benzyl, 2-ethoxyethyl, 1-carboxymethyl, or the like), an alkenyl group (preferably an alkenyl group having 2 to 20 carbon atoms, for example, vinyl, allyl, oleyl, or the like), an alkynyl group (preferably an alkynyl group having 2 to 20 carbon atoms, for example, ethynyl, butadiynyl, phenylethynyl, or the like), a cycloalkyl group (preferably a cycloalkyl group having 3 to 20 carbon atoms, for example, cyclopropyl, cyclopentyl, cyclohexyl, 4-methylcyclohexyl, or the like; here, in the case of being referred to as an alkyl group in the present specification, generally, a cycloalkyl group is also referred to), an aryl group (preferably an aryl group having 6 to 26 carbon atoms, for example, phenyl, 1-naphthyl, 4-methoxyphenyl, 2-chlorophenyl, 3-methylphenyl, or the like), an aralkyl group (preferably an aralkyl group having 2 to 20 carbon atoms, for example, benzyl, phenethyl, or the like), a heterocyclic group (preferably a heterocyclic group having 7 to 23 carbon atoms, preferably a 5- or 6-membered heterocyclic group having at least one selected from an oxygen atom, a sulfur atom, or a nitrogen atom as a ring-constituting atom, for example, tetrahydropyranyl, tetrahydrofuranyl, 2-pyridyl, 4-pyridyl, 2-imidazolyl, 2-benzimidazolyl, 2-thiazolyl, 2-oxazolyl, pyrrolidone group, or the like), an alkoxy group (preferably an alkoxy group having 1 to 20 carbon atoms, for example, methoxy, ethoxy, isopropyloxy, benzyloxy, or the like), an aryloxy group (preferably an aryloxy group having 6 to 26 carbon atoms, for example, phenoxy, 1-naphthyloxy, 3-methylphenoxy, 4-methoxyphenoxy, or the like; here, in the case of being referred to as an alkoxy group in the present specification, generally, an aryloyl group is also referred to), an alkoxycarbonyl group (preferably an alkoxycarbonyl group having 2 to 20 carbon atoms, for example, ethoxycarbonyl, 2-ethylhexyloxycarbonyl, or the like), an aryloxycarbonyl group (preferably an aryloxycarbonyl group having 6 to 26 carbon atoms, for example, phenoxycarbonyl, 1-naphthyloxycarbonyl, 3-methylphenoxycarbonyl, 4-methoxyphenoxycarbonyl, or the like), an amino group (preferably an amino group, alkylamino group, or arylamino group having 0 to 20 carbon atoms, for example, amino, N,N-dimethylamino, N,N-diethylamino, N-ethylamino, anilino, or the like), a sulfamoyl group (preferably a sulfamoyl group having 0 to 20 carbon atoms, for example, N,N-dimethylsulfamoyl, N-phenylsulfamoyl, or the like), an acyl group (preferably an acyl group having 1 to 20 carbon atoms, for example, acetyl, propionyl, butyryl, or the like), an aryloyl group (preferably an aryloyl group having 7 to 23 carbon atoms, for example, benzoyl or the like; here, in the case of being referred to as an acyl group in the present specification, generally, an aryloyl group is also referred to), an acyloxy group (preferably an acyloxy group having 1 to 20 carbon atoms, for example, acetyloxy, or the like), an aryloyloxy group (preferably an aryloyloxy group having 7 to 23 carbon atoms, for example, benzoyloxy, or the like; here, in the case of being referred to as an acyloxy group in the present specification, generally, an aryloyloxy group is also referred to), a carbamoyl group (preferably a carbamoyl group having 1 to 20 carbon atoms, for example, N,N-dimethylcarbamoyl, N-phenylcarbamoyl, or the like), an acylamino group (preferably an acylamino group having 1 to 20 carbon atoms, for example, acetylamino, benzoylamino, or the like), an alkylsulfanyl group (for example, an alkylsulfanyl group having 1 to 20 carbon atoms, for example, methylsulfanyl, ethylsulfanyl, isopropylsulfanyl, benzylsulfanyl, or the like), an arylsulfanyl group (preferably an arylsulfanyl group having 6 to 26 carbon atoms, for example, phenylsulfanyl, 1-naphthylsulfanyl, 3-methylphenylsulfanyl, 4-methoxyphenylsulfanyl, or the like), an alkylsulfonyl group (preferably an alkylsulfonyl group having 1 to 20 carbon atoms, for example, methylsulfonyl, ethylsulfonyl, or the like), an arylsulfonyl group (preferably an arylsulfonyl group having 6 to 22 carbon atoms, for example, benzenesulfonyl or the like), an alkylsilyl group (preferably an alkylsilyl group having 1 to 20 carbon atoms, for example, monomethylsilyl, dimethylsilyl, trimethylsilyl, triethylsilyl, or the like), an arylsilyl group (preferably an arylsilyl group having 6 to 42 carbon atoms, for example, triphenylsilyl, or the like), an alkoxysilyl group (preferably an alkoxysilyl group having 1 to 20 carbon atoms, for example, monomethoxysilyl, dimethoxysilyl, trimethoxysilyl, triethoxysilyl, or the like), an aryloxysilyl group (preferably an aryloxysilyl group having 6 to 42 carbon atoms, for example, triphenyloxysilyl, or the like), a phosphoyl group (preferably a phosphoryl group having 0 to 20 carbon atoms, for example, -OP(=O)(R^{P})₂), a phosphonyl group (preferably a phosphonyl group having 0 to 20 carbon atoms, for example, -P(=O)(R^{P})₂), a phosphinyl group (preferably a phosphinyl group having 0 to 20 carbon atoms, for example, -P(R^{P})₂), a (meth)acryloyl group, a (meth)acryloyloxy group, a (meth)acryloylimino group (a (meth)acrylamide group), a hydroxy group, a sulfanyl group, a carboxyl group, a phosphate group, a phosphoric acid group, a sulfonic acid group, a cyano group, and a halogen atom (for example, a fluorine atom, a chlorine atom, a bromine atom, an iodine atom, or the like).
In addition, in the respective groups exemplified as the substituent P, the substituent P may be further substituted.
In a case in which a compound, a substituent, a linking group, and the like has an alkyl group, an alkylene group, an alkenyl group, an alkenylene group, an alkynyl group, an alkynylene group, and/or the like, the compound, the substituent, the linking group, and the like may have a cyclic shape or a chain shape, may be linear or branched, and may be substituted or unsubstituted as described above.

### (Dispersant)

The solid electrolyte composition of the present invention may contain a dispersant. The addition of the dispersant enables the suppression of the agglomeration of the electrode active material and the inorganic solid electrolyte even in a case in which the concentration of any of the electrode active material and the inorganic solid electrolyte is high or a case in which the particle diameters are small and the surface area increases and the formation of a uniform active material layer and a uniform solid electrolyte layer. As the dispersant, a dispersant that is generally used for an all-solid state secondary battery can be appropriately selected and used. Generally, a compound intended for particle adsorption and steric repulsion and/or electrostatic repulsion is preferably used.

### (Lithium salt)

The solid electrolyte composition of the present invention may contain a lithium salt.

The lithium salt that can be used in the present invention is preferably a lithium salt that is ordinarily used in this kind of products and is not particularly limited, and, for example, lithium salts described below are preferred.
(L-1) Inorganic lithium salts: inorganic fluoride salts such as LiPF₆, LiBF₄, LiAsF₆, and LiSbF₆; perhalogen acid salts such as LiClO₄, LiBrO₄, and LiIO₄; inorganic chloride salts such as LiAlCl₄; and the like.
(L-2) Fluorine-containing organic lithium salts:
   perfluoroalkanesulfonate salts such as LiCF₃SO₃; perfluoroalkanesulfonylimide salts such as LiN(CF₃SO₂)₂, LN(CF₃CF₂SO₂)₂, LN(FSO₂)₂, and LiN(CF₃SO₂) (C₄F₉SO₂);
   perfluoroalkanesulfonylmethide salts such as LiC(CF₃SO₂)₃; fluoroalkylfluoride phosphate salts such as Li[PF₅(CF₂CF₂CF₃)], Li[PF₄(CF₂CF₂CF₃)₂], Li[PF₃(CF₂CF₂CF₃)₃], Li[PF₅(CF₂CF₂CF₂CF₃)], Li[PF₄(CF₂CF₂CF₂CF₃)₂], Li[PF₃(CF₂CF₂CF₂CF₃)₃]; and the like.
(L-3) Oxalatoborate salts: lithium bis(oxalato)borate, lithium difluorooxalatoborate, and the like.

Among these, LiPF₆, LiBF₄, LiAsF₆, LiSbF₆, LiClO₄, Li(Rf₁SO₃), LiN(Rf₁SO₂)₂, LN(FSO₂)₂, and LiN(Rf₁SO₂) (Rf₂SO₂) are preferred, and lithium imide salts such as LiPF₆, LiBF₄, LiN(Rf₁SO₂)₂, LN(FSO₂)₂, and LiN(Rf₁SO₂) (Rf₂SO₂) are more preferred. Here, Rf₁ and Rf₂ respectively represent perfluoroalkyl groups.

Meanwhile, the lithium salt may be used singly or two or more lithium salts may be used in random combination.

The content of the lithium salt is preferably 0.1 parts by mass or more and more preferably 0.5 parts by mass or more with respect to 100 parts by mass of the inorganic solid electrolyte. The upper limit is preferably 10 parts by mass or less and more preferably 5 parts by mass or less.

### (Ionic liquid)

The solid electrolyte composition of the present invention may also contain an ion liquid in order to further improve the ion conductivity of the solid electrolyte-containing sheet. The ion liquid is not particularly limited, but an ion liquid dissolving the above-described lithium salt is preferred from the viewpoint of effectively improving the ion conductivity. Examples thereof include compounds made of a combination of a cation and an anion described below.

### (i) Cation

Examples of the cation include an imidazolium cation having the following substituent, a pyridinium cation having the following substituent, a piperidinium cation having the following substituent, a pyrrolidinium cation having the following substituent, a morpholinium cation having the following substituent, a phosphonium cation having the following substituent, a quaternary ammonium cation having the following substituent, and the like.

As the cation, these cations may be used singly or two or more cations may be used in combination.

A quaternary ammonium cation, a piperidinium cation, or a pyrrolidinium cation is preferred.

Examples of the substituent include an alkyl group (preferably an alkyl group having 1 to 8 carbon atoms and more preferably an alkyl group having 1 to 4 carbon atoms), a hydroxyalkyl group (preferably a hydroxyalkyl group having 1 to 3 carbon atoms), an alkyloxyalkyl group (preferably an alkyloxyalkyl group having 2 to 8 carbon atoms and more preferably an alkyloxyalkyl group having 2 to 4 carbon atoms), an ether group, an allyl group, an aminoalkyl group (preferably an aminoalkyl group having 1 to 8 carbon atoms and more preferably an aminoalkyl group having 1 to 4 carbon atoms), and an aryl group (preferably an aryl group having 6 to 12 carbon atoms and more preferably an aryl group having 6 to 8 carbon atoms). The substituent may form a cyclic structure in a form of containing a cation site. These substituents may also have the above-described substituent P. Meanwhile, the ether group is used in combination with a different substituent. Examples of the different substituent include an alkyloxy group, an aryloxy group, and the like.

### (ii) Anion

Examples of the anion include a chloride ion, a bromide ion, an iodide ion, a boron tetrafluoride ion, a nitric acid ion, a dicyanamide ion, an acetate ion, an iron tetrachloride ion, a bis(trifluoromethanesulfonyl)imide ion, a bis(fluorosulfonyl)imide ion, a bis(perfluorobutylmethanesulfonyl)imide ion, an allylsulfonate ion, a hexafluorophosphate ion, a trifluoromethanesulfonate ion, and the like.

As the anion, these anions may be used singly or two or more anions may also be used in combination.

A boron tetrafluoride ion, a bis(trifluoromethanesulfonyl)imide ion, a bis(fluorosulfonyl)imide ion, a hexafluorophosphate ion, a dicyanamide ion, or an allylsulfonate ion is preferred, and a bis(trifluoromethanesulfonyl)imide ion, a bis(fluorosulfonyl)imide ion, or an allylsulfonate ion is more preferred.

Examples of the ion liquid include 1-allyl-3-ethylimidazolium bromide, 1-ethyl-3-methylimidazolium bromide, 1-(2-hydroxyethyl)-3-methylimidazolium bromide, 1-(2-methoxyethyl)-3-methylimidazolium bromide, 1-octyl-3-methylimidazolium chloride, N,N-diethyl-N-methyl-N-(2-methoxyethyl)ammonium tetrafluoroborate, 1 -ethyl-3 -methylimidazo lium bis(trifluoromethanesulfonyl)imide, 1-ethyl-3-methylimidazo lium bis(fluorosulfonyl)imide, 1 -ethyl-3-methylimidazolium dicyanamide, 1 -butyl-1-methylpyrrolidinium bis(trifluoromethanesulfonyl)imide, trimethylbutylammonium bis(trifluoromethanesulfonyl)imide, N,N-diethyl-N-methyl-N-(2-methoxyethyl) ammonium bis(trifluoromethanesulfonyl)imide, N-(2-methoxyethyl)-N-methylpyrrolidinium tetrafluoroboride, 1-butyl-1-methylpyrrolidinium imidazolium bis(fluorosulfonyl)imide, (2-acryloylethyl) trimethylammonium bis(trifluoromethanesulfonyl)imide, 1-ethyl-1-methylpyrrolidinium allyl sulfonate, 1-ethyl-3-methylimidazolium allylsulfonate, trihexyltetradecylphosphonium chloride, and the like.

The content of the ion liquid is preferably 0.1 parts by mass or more, more preferably 0.5 parts by mass or more, and particularly preferably 1 part by mass or more with respect to 100 parts by mass of the inorganic solid electrolyte. The upper limit is preferably 50 parts by mass or less, more preferably 20 parts by mass or less, and particularly preferably 10 parts by mass or less.

The mass ratio between the lithium salt and the ion liquid is preferably 1:20 to 20:1, more preferably 1:10 to 10:1, and particularly preferably 1:5 to 2:1.

### (Conductive auxiliary agent)

The solid electrolyte composition of the present invention may also contain a conductive auxiliary agent. The conductive auxiliary agent is not particularly limited, and conductive auxiliary agents that are known as ordinary conductive auxiliary agents can be used. The conductive auxiliary agent may be, for example, graphite such as natural graphite or artificial graphite, carbon black such as acetylene black, Ketjen black, or furnace black, irregular carbon such as needle cokes, a carbon fiber such as a vapor-grown carbon fiber or a carbon nanotube, or a carbonaceous material such as graphene or fullerene which are electron-conductive materials and also may be metal powder or a metal fiber of copper, nickel, or the like, and a conductive polymer such as polyaniline, polypyrrole, polythiophene, polyacetylene, or a polyphenylene derivative may also be used. In addition, these conductive auxiliary agents may be used singly or two or more conductive auxiliary agents may be used.

### (Active materials)

The solid electrolyte composition of the present invention may also contain active materials capable of intercalating and deintercalating ions of metal elements belonging to Group I or II of the periodic table. Examples of the active materials include positive electrode active materials and negative electrode active materials, and transition metal oxides that are positive electrode active materials or metal oxides that are negative electrode active materials are preferred.

In the present invention, the solid electrolyte composition containing the active material (a positive electrode active material or a negative electrode active material) will be referred to as a composition for an electrode (a composition for a positive electrode or a composition for a negative electrode).

### - Positive electrode active material -

A positive electrode active material that the solid electrolyte composition of the present invention may contain is preferably a positive electrode active material capable of reversibly intercalating and deintercalating lithium ions. The above-described material is not particularly limited as long as the material has the above-described characteristics and may be transition metal oxides, organic substances, elements capable of being complexed with Li such as sulfur, complexes of sulfur and metal, or the like.

Among these, as the positive electrode active material, transition metal oxides are preferably used, and transition metal oxides having a transition metal element M^{a} (one or more elements selected from Co, Ni, Fe, Mn, Cu, and V) are more preferred. In addition, an element M^{b} (an element of Group I (Ia) of the metal periodic table other than lithium, an element of Group II (IIa), or an element such as Al, Ga, In, Ge, Sn, Pb, Sb, Bi, Si, P, or B) may be mixed into this transition metal oxide. The amount of the element mixed is preferably 0 to 30 mol% of the amount (100 mol%) of the transition metal element M^{a}. The positive electrode active material is more preferably synthesized by mixing the element into the transition metal oxide so that the molar ratio of Li/M^{a} reaches 0.3 to 2.2.

Specific examples of the transition metal oxides include transition metal oxides having a bedded salt-type structure (MA), transition metal oxides having a spinel-type structure (MB), lithium-containing transition metal phosphoric acid compounds (MC), lithium-containing transition metal halogenated phosphoric acid compounds (MD), lithium-containing transition metal silicate compounds (ME), and the like.

Specific examples of the transition metal oxides having a bedded salt-type structure (MA) include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Specific examples of the transition metal oxides having a spinel-type structure (MB) include LiMn₂O₄ (LMO), LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compounds (MC) include olivine-type iron phosphate salts such as LiFePO₄ and Li₃Fe₂(PO₄)₃, iron pyrophosphates such as LiFeP₂O₇, and cobalt phosphates such as LiCoPO₄, and monoclinic nasicon-type vanadium phosphate salt such as Li₃V₂(PO₄)₃ (lithium vanadium phosphate).

Examples of the lithium-containing transition metal halogenated phosphoric acid compounds (MD) include iron fluorophosphates such as Li₂FePO₄F, manganese fluorophosphates such as Li₂MnPO₄F, cobalt fluorophosphates such as Li₂CoPO₄F.

Examples of the lithium-containing transition metal silicate compounds (ME) include Li₂FeSiO₄, Li₂MnSiO₄, Li₂CoSiO₄, and the like.

In the present invention, the transition metal oxides having a bedded salt-type structure (MA) is preferred, and LCO, LMO, NCA, or NMC is more preferred.

The shape of the positive electrode active material is not particularly limited, but is preferably a particle shape. The volume-average particle diameter (circle-equivalent average particle diameter) of positive electrode active material particles is not particularly limited. For example, the volume-average particle diameter can be set to 0.1 to 50 µm. In order to provide a predetermined particle diameter to the positive electrode active material, an ordinary crusher or classifier may be used. Positive electrode active materials obtained using a firing method may be used after being washed with water, an acidic aqueous solution, an alkaline aqueous solution, or an organic solvent. The volume-average particle diameter (circle-equivalent average particle diameter) of positive electrode active material particles can be measured using a laser diffraction/scattering-type particle size distribution measurement instrument LA-920 (trade name, manufactured by Horiba Ltd.).

The positive electrode active material may be used singly or two or more positive electrode active materials may be used in combination.

In the case of forming a positive electrode active material layer, the mass (mg) of the positive electrode active material per unit area (cm²) of the positive electrode active material layer (weight per unit area) is not particularly limited and can be appropriately determined depending on the set battery capacity.

The content of the positive electrode active material in the solid electrolyte composition is not particularly limited, but is preferably 10% to 95% by mass, more preferably 30% to 90% by mass, still more preferably 50% to 85% by mass, and particularly preferably 55% to 80% by mass with respect to a solid content of 100% by mass.

### - Negative electrode active material -

A negative electrode active material that the solid electrolyte composition of the present invention may contain is preferably a negative electrode active material capable of reversibly intercalating and deintercalating lithium ions. The above-described material is not particularly limited as long as the material has the above-described characteristics, and examples thereof include carbonaceous materials, metal oxides such as tin oxide, silicon oxide, metal complex oxides, a lithium single body, lithium alloys such as lithium aluminum alloys, metals capable of forming alloys with lithium such as Sn, Si, Al, and In and the like. Among these, carbonaceous materials or metal complex oxides are preferably used in terms of reliability. In addition, the metal complex oxides are preferably capable of absorbing and deintercalating lithium. The materials are not particularly limited, but preferably contain titanium and/or lithium as constituent components from the viewpoint of high-current density charging and discharging characteristics.

The carbonaceous material that is used as the negative electrode active material is a material substantially consisting of carbon. Examples thereof include petroleum pitch, carbon black such as acetylene black (AB), graphite (natural graphite, artificial graphite such as highly oriented pyrolytic graphite), and carbonaceous material obtained by firing a variety of synthetic resins such as polyacrylonitrile (PAN)-based resins or furfuryl alcohol resins. Furthermore, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, glassy carbon fibers, and active carbon fibers, mesophase microspheres, graphite whisker, flat graphite, and the like.

The metal oxides and the metal complex oxides being applied as the negative electrode active material are particularly preferably amorphous oxides, and furthermore, chalcogenides which are reaction products between a metal element and an element belonging to Group XVI of the periodic table are also preferably used. The amorphous oxides mentioned herein refer to oxides having a broad scattering band having a peak of a 2θ value in a range of 20° to 40° in an X-ray diffraction method in which CuKα rays are used and may have crystalline diffraction lines.

In a compound group consisting of the amorphous oxides and the chalcogenides, amorphous oxides of semimetal elements and chalcogenides are more preferred, and elements belonging to Groups XIII (IIIB) to XV (VB) of the periodic table, oxides consisting of one element or a combination of two or more elements of Al, Ga, Si, Sn, Ge, Pb, Sb, and Bi, and chalcogenides are particularly preferred. Specific examples of preferred amorphous oxides and chalcogenides include Ga₂O₃, SiO, GeO, SnO, SnO₂, PbO, PbO₂, Pb₂O₃, Pb₂O₄, Pb₃O₄, Sb₂O₃, Sb₂O₄, Sb₂O₈Bi₂O₃, Sb₂O₈Si₂O₃, Bi₂O₄, SnSiO₃, GeS, SnS, SnS₂, PbS, PbS₂, Sb₂S₃, Sb₂S₅, and SnSiS₃. In addition, these amorphous oxides may be complex oxides with lithium oxide, for example, Li₂SnO₂.

The negative electrode active material preferably contains a titanium atom. More specifically, Li₄Ti₅O₁₂ (lithium titanium oxide [LTO]) is preferred since the volume fluctuation during the absorption and deintercalation of lithium ions is small, and thus the high-speed charging and discharging characteristics are excellent, and the deterioration of electrodes is suppressed, whereby it becomes possible to improve the service lives of lithium ion secondary batteries.

In the present invention, a Si-based negative electrode is also preferably applied. Generally, a Si negative electrode is capable of absorbing a larger number of Li ions than a carbon negative electrode (graphite, acetylene black, or the like). That is, the amount of Li ions absorbed per unit mass increases. Therefore, it is possible to increase the battery capacity. As a result, there is an advantage that the battery drying duration can be extended.

The shape of the negative electrode active material is not particularly limited, but is preferably a particle shape. The average particle diameter of the negative electrode active material is preferably 0.1 µm to 60 µm. In order to provide a predetermined particle diameter, an ordinary crusher or classifier is used. For example, a mortar, a ball mill, a sand mill, an oscillatory ball mill, a satellite ball mill, a planetary ball mill, a swirling airflow-type jet mill, a sieve, or the like is preferably used. During crushing, it is also possible to carry out wet-type crushing in which water or an organic solvent such as methanol is made to coexist as necessary. In order to provide a desired particle diameter, classification is preferably carried out. The classification method is not particularly limited, and it is possible to use a sieve, a wind power classifier, or the like depending on the necessity. Both of dry-type classification and wet-type classification can be carried out. The average particle diameter of negative electrode active material particles can be measured using the same method as the method for measuring the volume-average particle diameter of the positive electrode active material.

The chemical formulae of the compounds obtained using a firing method can be computed using an inductively coupled plasma (ICP) emission spectroscopic analysis method as a measurement method from the mass difference of powder before and after firing as a convenient method.

The negative electrode active material may be used singly or two or more negative electrode active materials may be used in combination.

In the case of forming a negative electrode active material layer, the mass (mg) of the negative electrode active material per unit area (cm²) in the negative electrode active material layer (weight per unit area) is not particularly limited and can be appropriately determined depending on the set battery capacity.

The content of the negative electrode active material in the solid electrolyte composition is not particularly limited, but is preferably 10% to 80% by mass and more preferably 20% to 80% by mass with respect to a solid content of 100% by mass.

The surfaces of the positive electrode active material and/or the negative electrode active material may be coated with a separate metal oxide. Examples of the surface coating agent include metal oxides and the like containing Ti, Nb, Ta, W, Zr, Al, Si, or Li. Specific examples thereof include titanium oxide spinel, tantalum-based oxides, niobium-based oxides, lithium niobate-based compounds, and the like, and specific examples thereof include Li₄Ti₅O₁₂, Li₂Ti₂O₅, LiTaO₃, LiNbO₃, LiAlO₂, Li₂ZrO₃, Li₂WO₄, Li₂TiO₃, Li₂B₄O₇, Li₃PO₄, Li₂MoO₄, Li₃BO₃, LiBO₂, Li₂CO₃, Li₂SiO₃, SiO₂, TiO₂, ZrO₂, Al₂O₃, B₂O₃, and the like.

In addition, a surface treatment may be carried out on the surfaces of electrodes including the positive electrode active material or the negative electrode active material using sulfur, phosphorous, or the like.

Furthermore, the particle surfaces of the positive electrode active material or the negative electrode active material may be treated with an active light ray or an active gas (plasma or the like) before or after the coating of the surfaces.

### (Preparation of Solid Electrolyte Composition)

The solid electrolyte composition of the present invention can be prepared by dispersing the inorganic solid electrolyte (A) and the binder (B) in the presence of the dispersion medium (C) to produce a slurry.

The slurry can be produced by mixing the inorganic solid electrolyte, the binder, and the dispersion medium using a variety of mixers. The mixing device is not particularly limited, and examples thereof include a ball mill, a beads mill, a planetary mixer, a blade mixer, a roll mill, a kneader, and a disc mill. The mixing conditions are not particularly limited; however, in the case of using a ball mill, the inorganic solid electrolyte and the dispersion medium are preferably mixed together at 150 to 700 rpm (rotation per minute) for one hour to 24 hours.

In the case of preparing a solid electrolyte composition containing components such as an active material and a particle dispersant, the components may be added and mixed at the same time as a dispersion step of the inorganic solid electrolyte (A) and the binder (B) or may be separately added and mixed.

### [Sheet for all-solid state secondary battery]

The solid electrolyte-containing sheet of the present invention contains the inorganic solid electrolyte (A) having conductivity of ions of metals belonging to Group I or II of the periodic table, the binder (B), and 1 ppm or more and 10,000 ppm or less of the dispersion medium (C) of the total mass. The dispersion medium (C) includes the alicyclic compound (C1) composed of a carbon atom, a hydrogen atom, and/or a halogen atom, and the boiling point of the alicyclic compound (C1) at 760 mmHg is 100°C or higher and 180°C or lower.

The solid electrolyte-containing sheet of the present invention can be preferably used in all-solid state secondary batteries and is modified in a variety of aspects depending on the uses. Examples thereof include a sheet that is preferably used in a solid electrolyte layer (also referred to as a solid electrolyte sheet for an all-solid state secondary battery), a sheet that is preferably used in an electrode or a laminate of an electrode and a solid electrolyte layer (an electrode sheet for an all-solid state secondary battery), and the like. In the present invention, a variety of sheets described above will be collectively referred to as a sheet for an all-solid state secondary battery in some cases.

The sheet for an all-solid state secondary battery is a sheet having a solid electrolyte layer or an active material layer (electrode layer) on a base material. This sheet for an all-solid state secondary battery may further have other layers as long as the sheet has the base material and the solid electrolyte layer or the active material layer, but a sheet containing an active material is classified into an electrode sheet for an all-solid state secondary battery described below. Examples of other layers include a protective layer, a collector, a coating layer (a collector, a solid electrolyte layer, or an active material layer), and the like.

Examples of the solid electrolyte sheet for an all-solid state secondary battery include a sheet having a solid electrolyte layer and a protective layer on a base material in this order.

The base material is not particularly limited as long as the base material is capable of supporting the solid electrolyte layer, and examples thereof include sheet bodies (plate-like bodies) of materials, organic materials, inorganic materials, and the like described in the section of the collector described below. Examples of the organic materials include a variety of polymers and the like, and specific examples thereof include polyethylene terephthalate, polypropylene, polyethylene, cellulose, and the like. Examples of the inorganic materials include glass, ceramic, and the like.

The layer thickness of the solid electrolyte layer in the sheet for an all-solid state secondary battery is identical to the layer thickness of the solid electrolyte layer described in the section of an all-solid state secondary battery of the present invention.

This sheet is obtained by forming a film of the solid electrolyte composition of the present invention (by means of application and drying) on the base material (possibly, through other layers) and forming a solid electrolyte layer on the base material.

Here, the solid electrolyte composition of the present invention can be prepared using the above-described method.

An electrode sheet for an all-solid state secondary battery of the present invention (also simply referred to as "the electrode sheet") is an electrode sheet having an active material layer on a metal foil as a collector for forming an active material layer in an all-solid state secondary battery of the present invention. This electrode sheet is generally a sheet having a collector and an active material layer, and an aspect of having a collector, an active material layer, and a solid electrolyte layer in this order and an aspect of having a collector, an active material layer, a solid electrolyte layer, and an active material layer in this order are also considered as the electrode sheet.

The constitution and the layer thicknesses of the respective layers constituting the electrode sheet are identical to the constitution and the layer thicknesses of individual layers described in the section of an all-solid state secondary battery of the present invention.

The electrode sheet is obtained by forming a film of the solid electrolyte composition of the present invention which contains the active material (by means of application and drying) on the metal foil and forming an active material layer on the metal foil. A method for preparing the solid electrolyte composition containing an active material is identical to the method for preparing the solid electrolyte composition except for the fact that the active material is used.

### [All-solid state secondary battery]

An all-solid state secondary battery of the present invention has a positive electrode, a negative electrode facing the positive electrode, and a solid electrolyte layer between the positive electrode and the negative electrode. The positive electrode has a positive electrode active material layer on a positive electrode collector. The negative electrode has a negative electrode active material layer on a negative electrode collector.

At least one layer of the negative electrode active material layer, the positive electrode active material layer, or the solid electrolyte layer is preferably formed using the solid electrolyte composition of the present invention.

The kinds and the content ratio of the components of the active material layers and/or the solid electrolyte layer formed of the solid electrolyte composition are preferably identical to those in the solid content of the solid electrolyte composition.

Hereinafter, a preferred embodiment of the present invention will be described with reference to Fig. 1, but the present invention is not limited thereto.

### [Positive electrode active material layer, solid electrolyte layer, and negative electrode active material layer]

In the all-solid state secondary battery 10, at least one of the positive electrode active material layer, the solid electrolyte layer, or the negative electrode active material layer is formed using the solid electrolyte composition of the present invention.

That is, the solid electrolyte layer 3 is formed of the solid electrolyte composition of the present invention, the solid electrolyte layer 3 includes the inorganic solid electrolyte and the binder. The solid electrolyte layer, generally, does not include any positive electrode active material and/or any negative electrode active material. In the solid electrolyte layer 3, it is considered that the binder is present between the solid particles of the active materials and the like in the inorganic solid electrolyte and the adjacent active material layers. Therefore, the interface resistance between solid particles is reduced, and the bonding property is enhanced.

In a case in which the positive electrode active material layer 4 and/or the negative electrode active material layer 2 are formed using the solid electrolyte composition of the present invention, the positive electrode active material layer 4 and the negative electrode active material layer 2 respectively include a positive electrode active material or a negative electrode active material and further include the inorganic solid electrolyte and the binder. In a case in which the active material layers contain the inorganic solid electrolyte, it is possible to improve the ion conductivity. In the active material layers, it is considered that the binder is present between solid particles. Therefore, the interface resistance between solid particles is reduced, and the bonding property is enhanced.

The kinds of the inorganic solid electrolytes and the binder that the positive electrode active material layer 4, the solid electrolyte layer 3, and the negative electrode active material layer 2 contain may be identical to or different from each other.

In the present invention, any layer of the negative electrode active material layer, the positive electrode active material layer, and the solid electrolyte layer in the all-solid state secondary battery is produced using the solid electrolyte composition containing the binder and the solid particles such as the inorganic solid electrolyte. Therefore, it is possible to improve the bonding property between solid particles, and consequently, favorable cycle characteristics of the all-solid state secondary battery can also be realized.

### [Collector (Metal Foil)]

The positive electrode collector 5 and the negative electrode collector 1 are preferably an electron conductor.

In the present invention, there are cases in which any or both of the positive electrode collector and the negative electrode collector will be simply referred to as the collector.

As a material forming the positive electrode collector, aluminum, an aluminum alloy, stainless steel, nickel, titanium, or the like, and furthermore, a material obtained by treating the surface of aluminum or stainless steel with carbon, nickel, titanium, or silver (a material forming a thin film) is preferred, and, among these, aluminum and an aluminum alloy are more preferred.

As a material forming the negative electrode collector, aluminum, copper, a copper alloy, stainless steel, nickel, titanium, or the like, and furthermore, a material obtained by treating the surface of aluminum, copper, a copper alloy, or stainless steel with carbon, nickel, titanium, or silver is preferred, and aluminum, copper, a copper alloy, or stainless steel is more preferred.

Regarding the shape of the collector, generally, collectors having a film sheet-like shape are used, but it is also possible to use net-shaped collectors, punched collectors, compacts of lath bodies, porous bodies, foaming bodies, or fiber groups, and the like.

The thickness of the collector is not particularly limited, but is preferably 1 to 500 µm. In addition, the surface of the collector is preferably provided with protrusions and recesses by means of a surface treatment.

In the present invention, a functional layer, member, or the like may be appropriately interposed or disposed between the respective layers of the negative electrode collector, the negative electrode active material layer, the solid electrolyte layer, the positive electrode active material layer, and the positive electrode collector or on the outside thereof. In addition, the respective layers may be composed of a single layer or multiple layers.

### [Chassis]

It is possible to produce the basic structure of the all-solid state secondary battery by disposing the respective layers described above. Depending on the use, the basic structure may be directly used as an all-solid state secondary battery, but the basic structure may be used after being enclosed in an appropriate chassis in order to have a dry battery form. The chassis may be a metallic chassis or a resin (plastic) chassis. In a case in which a metallic chassis is used, examples thereof include an aluminum alloy chassis and a stainless-steel chassis. The metallic chassis is preferably classified into a positive electrode-side chassis and a negative electrode-side chassis and electrically connected to the positive electrode collector and the negative electrode collector respectively. The positive electrode-side chassis and the negative electrode-side chassis are preferably integrated by being joined together through a gasket for short circuit prevention.

### [Manufacturing of solid electrolyte-containing sheet]

The solid electrolyte-containing sheet of the present invention is obtained by forming a film of the solid electrolyte composition of the present invention on a base material (possibly, through a different layer) (application and drying) and forming a solid electrolyte layer on the base material.

With the above-described aspect, it is possible to produce an all-solid state secondary sheet which is a sheet of a base material and a solid electrolyte layer.

Additionally, regarding steps such as application, it is possible to use a method described in the following section of the manufacturing of an all-solid state secondary battery.

Meanwhile, the content proportion of the dispersion medium (C) in the solid electrolyte-containing sheet of the present invention can be measured using the following method.

A 20 mm×20 mm specimen was cut out from the solid electrolyte-containing sheet by punching and immersed in heavy tetrahydrofuran in a glass bottle. The obtained eluted substance is filtered using a syringe filter, and a quantitative operation by ¹H-NMR is carried out. The correlation between the ¹H-NMR peak surface area and the amount of the solvent is obtained by producing a calibration curve.

[All-solid state secondary battery and manufacturing of electrode sheet for all-solid state secondary battery]

The all-solid state secondary battery and the electrode sheet for an all-solid state secondary battery can be manufactured using an ordinary method. Specifically, the all-solid state secondary battery and the electrode sheet for an all-solid state secondary battery can be manufactured by forming the respective layers described above using the solid electrolyte composition of the present invention or the like. Hereinafter, the manufacturing method will be described in detail.

The all-solid state secondary battery of the present invention can be manufactured using a method including (through) a step of applying the solid electrolyte composition of the present invention onto a metal foil which serves as a collector and forming a coated film (film manufacturing).

For example, a solid electrolyte composition containing a positive electrode active material is applied as a material for a positive electrode (a composition for a positive electrode) onto a metal foil which is a positive electrode collector so as to form a positive electrode active material layer, thereby producing a positive electrode sheet for an all-solid state secondary battery. Next, a solid electrolyte composition for forming a solid electrolyte layer is applied onto the positive electrode active material layer so as to form a solid electrolyte layer. Furthermore, a solid electrolyte composition containing a negative electrode active material is applied as a material for a negative electrode (a composition for a negative electrode) onto the solid electrolyte layer so as to form a negative electrode active material layer. A negative electrode collector (a metal foil) is overlaid on the negative electrode active material layer, whereby it is possible to obtain an all-solid state secondary battery having a structure in which the solid electrolyte layer is sandwiched between the positive electrode active material layer and the negative electrode active material layer. A desired all-solid state secondary battery can be produced by enclosing the all-solid state secondary battery in a chassis as necessary.

In addition, it is also possible to manufacture an all-solid state secondary battery by carrying out the methods for forming the respective layers in a reverse order so as to form a negative electrode active material layer, a solid electrolyte layer, and a positive electrode active material layer on a negative electrode collector and overlaying a positive electrode collector thereon.

As another method, the following method can be exemplified. That is, a positive electrode sheet for an all-solid state secondary battery is produced as described above. In addition, a solid electrolyte composition containing a negative electrode active material is applied as a material for a negative electrode (a composition for a negative electrode) onto a metal foil which is a negative electrode collector so as to form a negative electrode active material layer, thereby producing a negative electrode sheet for an all-solid state secondary battery. Next, a solid electrolyte layer is formed on the active material layer in any one of these sheets as described above. Furthermore, the other one of the positive electrode sheet for an all-solid state secondary battery and the negative electrode sheet for an all-solid state secondary battery is laminated on the solid electrolyte layer so that the solid electrolyte layer and the active material layer come into contact with each other. An all-solid state secondary battery can be manufactured as described above.

As still another method, the following method can be exemplified. That is, a positive electrode sheet for an all-solid state secondary battery and a negative electrode sheet for an all-solid state secondary battery are produced as described above. In addition, separately from the positive electrode sheet for an all-solid state secondary battery and the negative electrode sheet for an all-solid state secondary battery, a solid electrolyte composition is applied onto a base material, thereby producing a solid electrolyte sheet for an all-solid state secondary battery consisting of a solid electrolyte layer. Furthermore, the positive electrode sheet for an all-solid state secondary battery and the negative electrode sheet for an all-solid state secondary battery are laminated together so as to sandwich the solid electrolyte layer that has been peeled off from the base material. An all-solid state secondary battery can be manufactured as described above.

An all-solid state secondary battery can be manufactured by combining the above-described forming methods. For example, a positive electrode sheet for an all-solid state secondary battery, a negative electrode sheet for an all-solid state secondary battery, and a solid electrolyte sheet for an all-solid state secondary battery are produced respectively. Next, a solid electrolyte layer peeled off from a base material is laminated on the negative electrode sheet for an all-solid state secondary battery and is then attached to the positive electrode sheet for an all-solid state secondary battery, whereby an all-solid state secondary battery can be manufactured. In this method, it is also possible to laminate the solid electrolyte layer on the positive electrode sheet for an all-solid state secondary battery and attach the solid electrolyte layer to the negative electrode sheet for an all-solid state secondary battery.

### (Formation of Individual Layers (Film Formation))

The method for applying the solid electrolyte composition is not particularly limited and can be appropriately selected. Examples thereof include coating (preferably wet-type coating), spray coating, spin coating, dip coating, slit coating, stripe coating, and bar coating.

At this time, the solid electrolyte composition may be dried after being applied or may be dried after being applied to multiple layers. The drying temperature is not particularly limited. The lower limit is preferably 30°C or higher, more preferably 60°C or higher, and still more preferably 80°C or higher, and the upper limit is preferably 300°C or lower, more preferably 250°C or lower, and still more preferably 200°C or lower. In a case in which the compositions are heated in the above-described temperature range, it is possible to remove the dispersion medium and form a solid state. In addition, the temperature is not excessively increased, and the respective members of the all-solid state secondary battery are not impaired, which is preferable. Therefore, in the all-solid state secondary battery, excellent total performance is exhibited, and it is possible to obtain a favorable bonding property.

After the production of the applied solid electrolyte composition or the all-solid state secondary battery, the respective layers or the all-solid state secondary battery is preferably pressurized. In addition, the respective layers are also preferably pressurized in a state of being laminated together. Examples of the pressurization method include a hydraulic cylinder pressing machine and the like. The welding pressure is not particularly limited, but is, generally, preferably in a range of 50 to 1,500 MPa.

In addition, the applied solid electrolyte composition may be heated at the same time as pressurization. The heating temperature is not particularly limited, but is generally in a range of 30°C to 300°C. The respective layers or the all-solid state secondary battery can also be pressed at a temperature higher than the glass transition temperature of the inorganic solid electrolyte.

The pressurization may be carried out in a state in which the applied solvent or dispersion medium has been dried in advance or in a state in which the solvent or the dispersion medium remains.

Meanwhile, the respective compositions may be applied at the same time, and the application, the drying, and the pressing may be carried out simultaneously and/or sequentially. The respective compositions may be applied to separate base materials and then laminated by means of transfer.

The atmosphere during the pressurization is not particularly limited and may be any one of in the atmosphere, under the dried air (the dew point: -20°C or lower), in an inert gas (for example, in an argon gas, in a helium gas, or in a nitrogen gas), and the like.

The pressing time may be a short time (for example, within several hours) at a high pressure or a long time (one day or longer) under the application of an intermediate pressure. In the case of members other than the sheet for an all-solid state secondary battery, for example, the all-solid state secondary battery, it is also possible to use a restraining device (screw fastening pressure or the like) of the all-solid state secondary battery in order to continuously apply an intermediate pressure.

The pressing pressure may be a pressure that is constant or varies with respect to a portion under pressure such as a sheet surface.

The pressing pressure can be changed depending on the area or film thickness of the portion under pressure. In addition, it is also possible to change the same portion with a pressure that varies stepwise.

A pressing surface may be flat or roughened.

### (Initialization)

The all-solid state secondary battery manufactured as described above is preferably initialized after the manufacturing or before the use. The initialization is not particularly limited, and it is possible to initialize the all-solid state secondary battery by, for example, carrying out initial charging and discharging in a state in which the pressing pressure is increased and then releasing the pressure up to a pressure at which the all-solid state secondary battery is ordinarily used.

### [Usages of all-solid state secondary battery]

The all-solid state secondary battery of the present invention can be applied to a variety of usages. Application aspects are not particularly limited, and, in the case of being mounted in electronic devices, examples thereof include notebook computers, pen-based input personal computers, mobile personal computers, e-book players, mobile phones, cordless phone handsets, pagers, handy terminals, portable faxes, mobile copiers, portable printers, headphone stereos, video movies, liquid crystal televisions, handy cleaners, portable CDs, mini discs, electric shavers, transceivers, electronic notebooks, calculators, portable tape recorders, radios, backup power supplies, memory cards, and the like. Additionally, examples of consumer usages include automobiles (electric vehicles and the like), electric vehicles, motors, lighting equipment, toys, game devices, road conditioners, watches, strobes, cameras, medical devices (pacemakers, hearing aids, shoulder massage devices, and the like), and the like. Furthermore, the all-solid state secondary battery can be used for a variety of military usages and universe usages. In addition, the all-solid state secondary battery can also be combined with solar batteries.

According to the preferred embodiment of the present invention, individual application forms as described below are derived.
[1] All-solid state secondary batteries in which at least one layer of a positive electrode active material layer, a solid electrolyte layer, or a negative electrode active material layer contains a lithium salt.
[2] Methods for manufacturing an all-solid state secondary battery in which a solid electrolyte layer is formed by applying a slurry including a lithium salt and a sulfide-based inorganic solid electrolyte dispersed using a dispersion medium in a wet manner.
[3] Solid electrolyte compositions containing an active material for producing the all-solid state secondary battery.
[4] Electrode sheets for a battery obtained by applying the solid electrolyte composition onto a metal foil to form a film.
[5] Methods for manufacturing an electrode sheet for a battery in which the solid electrolyte composition is applied onto a metal foil, thereby forming a film.

As described in the preferred embodiments [2] and [5], preferred methods for manufacturing the all-solid state secondary battery and the electrode sheet for a battery are all wet-type processes. Therefore, even in a region in at least one layer of the positive electrode active material layer or the negative electrode active material layer in which the content of the inorganic solid electrolyte is as low as 10% by mass or less, the adhesiveness between the active material and the inorganic solid electrolyte, an efficient ion conduction path can be maintained, and it is possible to manufacture an all-solid state secondary battery having a high energy density (Wh/kg) and a high output density (W/kg) per battery mass.

All-solid state secondary batteries refer to secondary batteries having a positive electrode, a negative electrode, and an electrolyte which are all composed of solid. In other words, all-solid state secondary batteries are differentiated from electrolytic solution-type secondary batteries in which a carbonate-based solvent is used as an electrolyte. Among these, the present invention is assumed to be an inorganic all-solid state secondary battery. All-solid state secondary batteries are classified into organic (high-molecular-weight) all-solid state secondary batteries in which a high-molecular-weight compound such as polyethylene oxide is used as an electrolyte and inorganic all-solid state secondary batteries in which the Li-P-S-based glass, LLT, LLZ, or the like is used. Meanwhile, the application of organic compounds to inorganic all-solid state secondary batteries is not inhibited, and organic compounds can also be applied as binders or additives of positive electrode active materials, negative electrode active materials, and inorganic solid electrolytes.

Inorganic solid electrolytes are differentiated from electrolytes in which the above-described high-molecular-weight compound is used as an ion conductive medium (high-molecular-weight electrolyte), and inorganic compounds serve as ion conductive media. Specific examples thereof include the Li-P-S glass, LLT, and LLZ. Inorganic solid electrolytes do not emit positive ions (Li ions) and exhibit an ion transportation function. In contrast, there are cases in which materials serving as an ion supply source which is added to electrolytic solutions or solid electrolyte layers and emits positive ions (Li ions) are referred to as electrolytes; however, in the case of being differentiated from electrolytes as the ion transportation materials, the materials are referred to as "electrolyte salts" or "supporting electrolytes". Examples of the electrolyte salts include LiTFSI.

In the present invention, "compositions" refer to mixtures obtained by uniformly mixing two or more components. Here, compositions may partially include agglomeration or uneven distribution as long as the compositions substantially maintain uniformity and exhibit desired effects.

### Examples

Hereinafter, the present invention will be described in more detail on the basis of examples. Meanwhile, the present invention is not interpreted to be limited thereto. "Parts" and "%" that represent compositions in the following examples are mass-based unless particularly otherwise described. In addition, "room temperature" refers to 25°C.

### <Synthesis of sulfide-based inorganic solid electrolyte>

### - Synthesis of Li-P-S-based glass -

As a sulfide-based inorganic solid electrolyte, Li-P-S-based glass was synthesized with reference to a non-patent document of T. Ohtomo, A. Hayashi, M. Tatsumisago, Y. Tsuchida, S. HamGa, K. Kawamoto, Journal of Power Sources, 233, (2013), pp. 231 to 235 and A. Hayashi, S. Hama, H. Morimoto, M. Tatsumisago, T. Minami, Chem. Lett., (2001), pp. 872 and 873.

Specifically, in a globe box under an argon atmosphere (dew point: -70°C), lithium sulfide (Li₂S, manufactured by Aldrich-Sigma, Co. LLC. Purity: >99.98%) (2.42 g) and diphosphorus pentasulfide (P₂S₅, manufactured by Aldrich-Sigma, Co. LLC. Purity: >99%) (3.90 g) were respectively weighed, injected into an agate mortar, and mixed using an agate muddler for five minutes. Meanwhile, the mixing ratio between Li₂S and P₂S₅ was set to 75:25 in terms of molar ratio.

Sixty six zirconia beads having a diameter of 5 mm were injected into a 45 mL zirconia container (manufactured by Fritsch Japan Co., Ltd.), the full amount of the mixture of the lithium sulfide and the diphosphorus pentasulfide was injected thereinto, and the container was sealed in an argon atmosphere. The container was set in a planetary ball mill P-7 (trade name) manufactured by Fritsch Japan Co., Ltd., mechanical milling was carried out at a temperature of 25°C and a rotation speed of 510 rpm for 20 hours, thereby obtaining yellow powder (6.20 g) of a sulfide-based inorganic solid electrolyte (Li-P-S-based glass). The ion conductivity was 0.28 mS/cm, and the volume-average particle diameter was 20.3 µm.

### <Method for measuring volume-average particle diameter>

### (Measurement of volume-average particle diameter of inorganic solid electrolyte before addition to solid electrolyte composition)

Using a dynamic light scattering-type particle size distribution measurement instrument according to JIS 8826:2005 (manufactured by Horiba Ltd., trade name: LB-500), the sulfide-based inorganic solid electrolyte particles synthesized above were split into a 20 ml sample bottle as a sample and diluted and adjusted using toluene so that a solid content concentration reached 0.2% by mass, data capturing was carried out 50 times using a 2 ml silica cell for measurement at a temperature of 25°C, and the obtained volume-based arithmetic average was considered as the average particle diameter. In addition, a particle diameter at 50% in the cumulative particle size distribution from the fine particle side was considered as the cumulative 50% particle diameter. The average particle diameter of the particles before mixing was measured using the above-described method.

### (Example 1)

### <Experiment and measurement>

On a solid electrolyte composition prepared below, a dispersion stability test, the measurement of the viscosity, the measurement of the volume-average particle diameter of the inorganic solid electrolyte in the solid electrolyte composition, and the measurement of the ion conductivity were carried out. The test and measurement results are summarized in Table 1.

In addition, on a composition for a positive electrode and a composition for a negative electrode prepared below, a dispersion stability test and the measurement of the viscosity were carried out. The test and measurement results are summarized in Tables 2 and 3.

Hereinafter, a test methods and measurement methods will be described.

### <Dispersion stability test>

Individual compositions described below were prepared and then left to stand in a transparent sample bottle at 25°C for 24 hours. The states of the individual compositions before and after being left to stand for 24 hours were visually observed. The solid components of the individual compositions before being left to stand for 24 hours and the solid components of the individual compositions after being left to stand for 24 hours were visually observed and evaluated using the following evaluation standards. Hereinafter, the evaluation standards will be described. The rankings of A to C are the passing levels.

### <Evaluation standards>

A: No change (sedimentation) was observed.
B: The proportion of the sedimented solid component was 10% or less.
C: The proportion of the sedimented solid component was more than 10% and 30% or less.
D: The proportion of the sedimented solid component was more than 30% and 80% or less.
E: The proportion of the sedimented solid component was more than 80%.

### <Slurry viscosity>

The viscosities at 20°C of the individual compositions that were the prepared slurries were measured using a rotary viscometer (RE-85 type (manufactured by Toki Sangyo Co., Ltd.)).

### <Method for measuring volume-average particle diameter>

### (Measurement of volume-average particle diameter of inorganic solid electrolyte in solid electrolyte composition)

Using a dynamic light scattering-type particle size distribution measurement instrument according to JIS 8826:2005 (manufactured by Horiba Ltd., trade name: LB-500), the solid electrolyte composition was split into a 20 ml sample bottle as a sample and diluted and adjusted using toluene so that a solid content concentration reached 0.2% by mass, data capturing was carried out 50 times using a 2 ml silica cell for measurement at a temperature of 25°C, and the obtained volume-based arithmetic average was considered as the average particle diameter. In addition, a particle diameter at 50% in the cumulative particle size distribution from the fine particle side was considered as the cumulative 50% particle diameter. The average particle diameter of the inorganic solid electrolyte particles in the solid electrolyte composition was measured using this method.

The results are summarized in Table 1.

### <Measurement of ion conductivity>

The slurry of the solid electrolyte composition was dried at normal pressure for two hours on a hot plate heated to 100°C in a dried air atmosphere having a dew point of -60°C. The ion conductivity of the obtained dried powder was measured using an impedance method.

The dried powder (300 mg) was loaded into a cylinder having a diameter of 14.5 mm, thereby producing a coin-like jig. The outer portion of the coin-like jig was sandwiched by jigs capable of applying a pressure of 500 kgf/cm² between the electrodes and was used for the measurement of the ion conductivity.

The ion conductivity under pressurization (500 kgf/cm²) was obtained in a constant-temperature tank (30°C) using the coin-like jig obtained above and an alternating-current impedance method. At this time, for the pressurization of the coin-like jig, a testing body illustrated in Fig. 2 was used. 11 represents an upper support plate, 12 represents a lower support plate, 13 represents the coin-type jig, and S represents a screw.

### <Preparation of individual compositions>

### - Preparation of solid electrolyte composition S-1 -

Fifty zirconia beads having a diameter of 3 mm were injected into a 45 mL zirconia container (manufactured by Fritsch Japan Co., Ltd.), an oxide-based inorganic solid electrolyte LLZ (manufactured by Toshima Manufacturing Co., Ltd.) (1.5 g) and a binder (B-1) (0.020 g) were added thereto, and ethylcyclohexane (5.3 g) was injected thereinto as a dispersion medium. After that, the container was set in a planetary ball mill P-7 (trade name) manufactured by Fritsch Japan Co., Ltd., the components were continuously mixed together at a temperature of 25°C and a rotation speed of 300 rpm for two hours, thereby preparing a solid electrolyte composition S-1.

### (2) Preparation of solid electrolyte composition S-2

Fifty zirconia beads having a diameter of 3 mm were injected into a 45 mL zirconia container (manufactured by Fritsch Japan Co., Ltd.), the sulfide-based inorganic solid electrolyte Li-P-S-based glass synthesized above (0.8 g), the binder (B-1) (0.040 g), and ethylcyclohexane (3.6 g) as a dispersion medium were injected thereinto. After that, the container was set in a planetary ball mill P-7 (trade name) manufactured by Fritsch Japan Co., Ltd., and the components were continuously stirred at a temperature of 25°C and a rotation speed of 300 rpm for two hours, thereby preparing a solid electrolyte composition S-2.

### - Preparation of solid electrolyte compositions S-3 to S-19 and T1 and T-4 -

Solid electrolyte compositions S-3 to S-19 and T1 and T-4 were prepared using the same method as for the solid electrolyte composition S-1 or S-2 except for the fact that the compositions were changed as shown in Table 1.

The compositions and the components of the solid electrolyte compositions are summarized in Table 1.

Here, the solid electrolyte compositions S-1 to S-5, S-7 to S-11 and S-14 to S-19 are the solid electrolyte composition of the present invention, and the solid electrolyte compositions T-1 to T-4 are comparative solid electrolyte compositions.

**[Table 1]**

| Solid electrolyte composition | Inorganic solid electrolyte (A) | | Binder (B) | | Dispersion medium (C) | | | | | | Lithium salt | | Ion liquid | | Evaluation | | | |
|---|---|---|---|---|---|---|---|---|---|---|---|---|---|---|---|---|---|---|
| | Type | Parts by mass | Type | Parts by mass | Alicyclic compound (C1) | | | Dispersion medium (C2) other than (C1) | Mixing ratio (C1)/(C2) | Parts by mass | Type | Parts by mass | Type | Parts by mass | Dispersion stability | Viscosity (mPa·s) | Crystallite diameter (µm) | Ion conductivity (mS/cm) |
| | | | | | Type | Boling point (°C) | Viscosity (mPa·s) | T ype | | | | | | | | | | |
| S-1 | LLZ | 1.5 | B-1 | 0.020 | Ethylcyclohexane | 131 | 0.78 | - | 100/0 | 5.3 | - | - | - | - | B | 120 | 2.3 | 0.02 |
| S-2 | Li/P/S | 0.8 | B-1 | 0.040 | Ethylcyclohexane | 131 | 0.78 | - | 100/0 | 3.6 | - | - | - | - | B | 156 | 2.4 | 0.21 |
| S-3 | Li/P/S | 0.8 | B-2 | 0.040 | Isopropylcyclohexane | 155 | 0.82 | - | 100/0 | 3.6 | - | - | - | - | A | 152 | 2.6 | 0.20 |
| S-4 | Li/P/S | 0.8 | B-3 | 0.040 | t-butylcyclohexane | 167 | 0.80 | - | 100/0 | 3.6 | - | - | - | - | A | 169 | 3.1 | 0.21 |
| S-5 | Li/P/S | 0.8 | B-4 | 0.040 | 1,3,5-trimethylcyclohexane | 140 | 0.85 | - | 100/0 | 3.6 | - | - | - | - | A | 156 | 3.2 | 0.19 |
| S-6* | Li/P/S | 0.8 | B-5 | 0.040 | Ethylcyclopentane | 103 | 0.71 | - | 100/0 | 3.6 | - | - | - | - | B | 163 | 2.1 | 0.21 |
| S-7 | Li/P/S | 1.5 | B-1 | 0.040 | chlorocyclopentane | 142 | 1.73 | - | 100/0 | 5.3 | - | - | - | - | A | 230 | 1.2 | 0.22 |
| S-8 | Li/P/S | 1.5 | B-2 | 0.040 | Cyclooctene | 145 | 1.56 | - | 100/0 | 5.3 | - | - | - | - | A | 198 | 1.1 | 0.15 |
| S-9 | Li/P/S | 1.5 | B-4 | 0.040 | Cyclooctadiene | 151 | 1.23 | - | 100/0 | 5.3 | - | - | - | - | A | 215 | 1.4 | 0.13 |
| S-10 | Li/P/S | 1.5 | B-4 | 0.040 | Cyclooctane | 149 | 2.28 | - | 100/0 | 5.3 | - | - | - | - | A | 263 | 0.9 | 0.21 |
| S-11 | Li/P/S | 1.5 | B-5 | 0.040 | Cyclooctane | 149 | 2.28 | - | 100/0 | 5.3 | - | - | - | - | A | 252 | 0.8 | 0.22 |
| S-12* | Li/P/S | 1.5 | B-4 | 0.040 | Methylcyclohexane | 101 | 0.73 | Heptane | 70/30 | 5.3 | - | - | - | - | B | 180 | 1.3 | 0.25 |
| S-13* | Li/P/S | 1.5 | B-5 | 0.040 | Methylcyclohexane | 101 | 0.73 | Octane | 80/20 | 5.3 | - | - | - | - | B | 186 | 1.5 | 0.25 |
| S-14 | Li/P/S | 1.5 | B-4 | 0.040 | Cyclooctane | 149 | 2.28 | Dibutyl ether | 90/10 | 5.3 | - | - | - | - | A | 250 | 0.9 | 0.12 |
| S-15 | Li/P/S | 1.5 | B-5 | 0.040 | Cyclooctane | 149 | 2.28 | Diethoxyethane | 90/10 | 5.3 | - | - | - | - | A | 260 | 0.8 | 0.11 |
| S-16 | Li/P/S | 1.5 | B-4 | 0.040 | Cyclooctane | 149 | 2.28 | Butyl acetate | 95/5 | 5.3 | - | - | - | - | A | 298 | 0.9 | 0.14 |
| S-17 | Li/P/S | 1.5 | B-5 | 0.040 | Cyclooctane | 149 | 2.28 | Methyl ethyl ketone | 95/5 | 5.3 | - | - | - | - | A | 287 | 0.9 | 0.11 |
| S-18 | Li/P/S | 1.5 | B-4 | 0.040 | Cyclooctane | 149 | 2.28 | Triethylene glycol dimethyl ether | 98/2 | 5.3 | LiTFSI | 0.01 | TMBATFSI | 0.02 | B | 313 | 0.9 | 0.42 |
| S-19 | Li/P/S | 1.5 | B-5 | 0.040 | Cyclooctane | 149 | 2.28 | Tetraethylene glycol dimethyl ether | 98/2 | 5.3 | LiTFSI | 0.01 | EMImTFSI | 0.02 | B | 335 | 0.9 | 0.49 |
| T-1 | LLZ | 1.5 | B-1 | 0.040 | Heptane | 98 | 0.42 | - | 100/0 | 5.3 | - | - | - | - | E | 76 | 5.2 | 0.10 |
| T-2 | Li/P/S | 1.5 | B-2 | 0.040 | Heptane | 80 | 0.42 | Dibutyl ether | 90/10 | 5.3 | - | - | - | - | D | 98 | 2.1 | 0.11 |
| T-3 | Li/P/S | 1.5 | B-4 | 0.040 | Decalin | 186 | 3.81 | - | 100/0 | 5.3 | - | - | - | - | D | 367 | 3.7 | 0.05 |
| T-4 | Li/P/S | 1.5 | B-4 | 0.040 | Cyclohexane | 80 | 1.02 | - | 100/0 | 5.3 | - | - | - | - | C | 220 | 3.9 | 0.13 |

| | | | | | | | | | | | | | | | | | | |
|---|---|---|---|---|---|---|---|---|---|---|---|---|---|---|---|---|---|---|
| <Notes of table> B-1: PVdF-HFP (manufactured by Arkema S. A.) B-2: SBR (manufactured by JSR Corporation) B-3: An acrylic acid-methyl acrylate copolymer prepared using the following method (20/80 molar ratio, Mw: 25,000) Acrylic acid (manufactured by Wako Pure Chemical Industries, Ltd.) (1.2 g) and methyl acrylate (4.2 g) (manufactured by Wako Pure Chemical Industries, Ltd.) were dissolved in methyl ethyl ketone (MEK) (30 g) in a 100 mL three-neck flask and were substituted with nitrogen while being heated to 75°C. Azoisobutyronitrile (V-60: trade name, manufactured by Wako Pure Chemical Industries, Ltd.) (0.15 g) was added thereto and heated at 75°C for six hours in a nitrogen atmosphere. The obtained polymer solution was polymer-precipitated using hexane, thereby obtaining white powder. B-4: Acrylic latex, a binder (B-1) described in JP2015-088486A, an average particle diameter: 450 µm (dispersion medium: ethylcyclohexane), an average particle diameter: 180 µm (dispersion medium: chlorocyclohexane) B-5: Urethane polymer, an exemplary compound (44) described in JP2015-088480A (the average particle diameters of binders are described only for binders that are present in a particle form in a dispersion medium) LLZ: Li₇La₃Zr₂O₁₂ (manufactured by Toshima Manufacturing Co., Ltd.) Li/P/S: Li-P-S-based glass synthesized above The boiling point (°C) of the alicyclic compound (C1) is the boiling point at 760 mmHg, and the viscosity (mPa·s) of the alicyclic compound (C1) is the viscosity at 20°C. In order for the comparison with the solid electrolyte composition of the present invention, a part of the dispersion media used for T-1 to T-4 are described in the column of the alicyclic compound (C1). LiTFSI: Lithium bis(trifluoromethanesulfonyl)imide TMBATFSI: Trimethyl butyl ammonium bis(trifluoromethanesulfonyl)imide EMImTFSI: 1 -Ethyl-3 -methylimidazo lium bis(trifluoromethanesulfonyl)imide Particle diameter: The volume-average particle diameter of the inorganic solid electrolyte *: Reference Example | | | | | | | | | | | | | | | | | | |

The average particle diameter of the binder particles was measured in the following order. A dispersion liquid of 1% by mass of the binder was prepared using a random solvent (the dispersion medium that was used to prepare the solid electrolyte composition, ethylcyclohexane or chlorocyclohexane in the case of the binder B-1). The volume-average particle diameter of the binder particles was measured using this dispersion liquid specimen and a laser diffraction/scattering-type particle size distribution measurement instrument LA-920 (manufactured by Horiba Ltd.).

### - Preparation of composition for positive electrode P-1 -

Fifty zirconia beads having a diameter of 3 mm were injected into a 45 mL zirconia container (manufactured by Fritsch Japan Co., Ltd.), and the inorganic solid electrolyte composition synthesized above (S-1) (6.8 g) was added thereto. A positive electrode active material LCO (3.2 g) was added thereto, and then the container was set in a planetary ball mill P-7 (trade name) manufactured by Fritsch Japan Co., Ltd., and the components were continuously stirred at a temperature of 25°C and a rotation speed of 100 rpm for 10 minutes, thereby preparing a solid electrolyte composition for a positive electrode P-1.

The compositions of the solid electrolyte compositions for a positive electrode are summarized in Table 2.

Here, the solid electrolyte compositions for a positive electrode P-1 to P-19 are the solid electrolyte composition of the present invention, and the solid electrolyte compositions for a positive electrode HP-1 to HP-4 are comparative solid electrolyte compositions.

**[Table 2]**

| Solid electrolyte composition for positive electrode | Solid electrolyte composition | | Positive electrode active material | | Conductive auxiliary agent | | Evaluation | |
|---|---|---|---|---|---|---|---|---|
| | Type | Parts by mass | Type | Parts by mass | Type | Parts by mass | Dispersion stability | Viscosity (mPa·s) |
| P-1 | S-1 | 6.8 | LCO | 3.2 | - | - | B | 185 |
| P-2 | S-2 | 4.4 | LCO | 2.8 | - | - | B | 297 |
| P-3 | S-3 | 4.4 | LCO | 2.8 | - | - | A | 252 |
| P-4 | S-4 | 4.4 | LCO | 2.8 | - | - | B | 293 |
| P-5 | S-5 | 4.4 | LCO | 2.8 | - | - | A | 275 |
| P-6* | S-6 | 4.4 | LMO | 2.8 | - | - | B | 297 |
| P-7 | S-7 | 6.8 | LMO | 4.2 | - | - | A | 255 |
| P-8 | S-8 | 6.8 | LMO | 4.2 | - | - | B | 307 |
| P-9 | S-9 | 6.8 | LMO | 4.2 | - | - | A | 308 |
| P-10 | S-10 | 6.8 | LMO | 4.2 | - | - | A | 309 |
| P-11 | S-11 | 6.8 | NCA | 3.7 | - | - | A | 314 |
| P-12* | S-12 | 6.8 | NCA | 3.7 | - | - | B | 294 |
| P-13* | S-13 | 6.8 | NCA | 3.7 | - | - | B | 342 |
| P-14 | S-14 | 6.8 | NCA | 3.7 | - | - | A | 322 |
| P-15 | S-15 | 6.8 | NMC | 3.2 | - | - | B | 316 |
| P-16 | S-16 | 6.8 | NMC | 3.2 | - | - | A | 331 |
| P-17 | S-17 | 6.8 | NMC | 3.2 | - | - | A | 338 |
| P-18 | S-18 | 6.8 | NMC | 3.2 | AB | 0.09 | B | 340 |
| P-19 | S-19 | 6.8 | NMC | 3.2 | AB | 0.09 | B | 340 |
| HP-1 | T-1 | 6.8 | LMO | 4.2 | - | - | E | 116 |
| HP-2 | T-2 | 6.8 | LMO | 4.2 | - | - | D | 192 |
| HP-3 | T-3 | 6.8 | NMC | 3.2 | - | - | D | 347 |
| HP-4 | T-4 | 6.8 | NMC | 3.2 | - | - | D | 176 |

| | | | | | | | | |
|---|---|---|---|---|---|---|---|---|
| <Notes of table> LCO: LiCoO₂ LMO: LiMn₂O₄ NCA: LiNi_{0.85}Co_{0.10}Al_{0.05}O₂ NMC: LiNi_{1/3}Co_{1/3}Mn_{1/3}O₂ AB: Acetylene black *: Reference Example | | | | | | | | |

### - Preparation of composition for negative electrode -

Fifty zirconia beads having a diameter of 3 mm were injected into a 45 mL zirconia container (manufactured by Fritsch Japan Co., Ltd.), and the inorganic solid electrolyte composition synthesized above (S-1) (6.8 g) was added thereto. A negative electrode active material LTO (Li₄Ti₅O₁₂) (3.2 g) was added thereto, and then the container was set in a planetary ball mill P-7 (trade name) manufactured by Fritsch Japan Co., Ltd., and the components were continuously stirred at a temperature of 25°C and a rotation speed of 100 rpm for 10 minutes, thereby preparing a solid electrolyte composition for a negative electrode N-1.

The compositions of the solid electrolyte compositions for a negative electrode are summarized in Table 3.

Here, the solid electrolyte compositions for a negative electrode N-1 to N-17 are the solid electrolyte composition of the present invention, and the solid electrolyte compositions for a negative electrode HN-1 to HN-4 are comparative solid electrolyte compositions.

**[Table 3]**

| Solid electrolyte composition for negative electrode | Solid electrolyte composition | | Negative electrode active material | | Evaluation | |
|---|---|---|---|---|---|---|
| | Type | Parts by mass | Type | Parts by mass | Dispersion stability | Viscosity (mPa·s) |
| N-1 | S-1 | 6.8 | LTO | 3.2 | B | 464 |
| N-2 | S-2 | 4.4 | LTO | 2.8 | B | 490 |
| N-3 | S-3 | 4.4 | LTO | 2.8 | A | 487 |
| N-4 | S-4 | 4.4 | Graphite | 2.8 | B | 467 |
| N-5 | S-5 | 4.4 | Graphite | 2.8 | A | 521 |
| N-6* | S-6 | 4.4 | Si | 2.8 | B | 468 |
| N-7 | S-7 | 6.8 | Si | 4.2 | A | 524 |
| N-8 | S-8 | 6.8 | LTO | 4.2 | B | 458 |
| N-9 | S-9 | 6.8 | LTO | 4.2 | A | 484 |
| N-10 | S-10 | 6.8 | Graphite | 4.2 | A | 513 |
| N-11 | S-11 | 6.8 | Graphite | 3.7 | A | 548 |
| N-12* | S-12 | 6.8 | Graphite | 3.7 | B | 524 |
| N-13* | S-13 | 6.8 | Si | 3.7 | B | 512 |
| N-14 | S-14 | 6.8 | Si | 3.7 | A | 539 |
| N-15 | S-15 | 6.8 | Si | 3.2 | B | 534 |
| N-16 | S-16 | 6.8 | Graphite | 3.2 | A | 508 |
| N-17 | S-17 | 6.8 | Graphite | 3.2 | A | 540 |
| HN-1 | T-1 | 6.8 | LTO | 4.2 | D | 152 |
| HN-2 | T-2 | 6.8 | Graphite | 4.2 | D | 165 |
| HN-3 | T-3 | 6.8 | Graphite | 3.2 | C | 540 |
| HN-4 | T-4 | 6.8 | Graphite | 3.2 | D | 112 |

| | | | | | | |
|---|---|---|---|---|---|---|
| <Notes of table> LTO: Li₄Ti₅O₁₂ *: Reference Example | | | | | | |

The solid electrolyte composition of the present invention is excellent in terms of the dispersion stability of the solid electrolyte, has a viscosity preferable for the manufacturing of batteries, and is capable of dispersing the inorganic solid electrolyte in the dispersion medium in a further-miniaturized state. It is found that the ion conductivity of the obtained powder is also maintained at a high level.

### - Production of electrode sheet -

The slurry of the solid electrolyte composition for a positive electrode P-1 was applied onto a 40 µm-thick aluminum foil using an applicator (trade name: SA-201 Baker type applicator, manufactured by Tester Sangyo Co., Ltd.) and heated at 120°C for one hour using a heat pressing machine to remove the dispersion medium, thereby obtaining an electrode sheet for an all-solid state secondary battery PS-1 having a thickness of approximately 160 µm (electrode sheet for a positive electrode PS-1).

Electrode sheets for a positive electrode PS-2 to PS-19 and HPS-1 to HPS-4 were produced in the same manner.

In Table 4, positive electrode layers PS-1 to PS-19 and HPS-1 to HPS-4 indicate that positive electrode layers of all-solid state secondary batteries are respectively positive electrode layers of the electrode sheets for a positive electrode PS-1 to PS-19 and HPS-1 to HPS-4.

A solid electrolyte sheet for an all-solid state secondary battery S-1 was produced using the solid electrolyte composition S-1 in the same manner as the electrode sheet for a positive electrode PS-1. Solid electrolyte sheets for an all-solid state secondary battery S-2 to S-19 and HS-1 to HS-4 were produced in the same manner as the solid electrolyte sheet for an all-solid state secondary battery S-1.

In Table 4, solid electrolyte layers S-1 to S-19 and HS-1 to HS-4 indicate that solid electrolyte layers of all-solid state secondary batteries are respectively solid electrolyte layers of the solid electrolyte sheets for an all-solid state secondary battery S-1 to S-19 and HS-1 to HS-4.

An electrode sheet for a negative electrode NS-1 was produced using the solid electrolyte composition for a negative electrode N-1 in the same manner as the electrode sheet for a positive electrode PS-1. Electrode sheets for a negative electrode NS-2 to NS-17 and HNS-1 to HNS-4 were produced in the same manner as the electrode sheet for a negative electrode NS-1.

In Table 4, negative electrode layers NS-1 to NS-17 and HNS-1 to HNS-4 indicate that negative electrode layers of all-solid state secondary batteries are respectively negative electrode layers of the electrode sheets for a negative electrode NS-1 to NS-17 and HNS-1 to HNS-4.

### <Testing>

The layer thickness uniformity test was carried out on the solid electrolyte sheets for an all-solid state secondary battery and the electrode sheets for an all-solid state secondary battery produced above. Hereinafter, the testing method will be described. In addition, the results are summarized in Table 4.

### <Layer thickness uniformity test>

25 mmx25 mm Specimens were cut out from the obtained solid electrolyte sheets for an all-solid state secondary battery and the obtained electrode sheets for an all-solid state secondary battery by punching and were considered as samples. The layer thicknesses of these samples were measured at nine points (three vertical points×three horizontal points) using a layer thickness meter, and the average value thereof and the standard deviation thereof were obtained and evaluated using the following evaluation standards.

In a case in which sheets that are obtained from the respective compositions have a uniform thickness respectively, it is possible to suppress defects caused by uneven application in the manufacturing of the sheets, and a short circuit suppression effect in the case of combining the sheet into an electrode and operating the electrode can be anticipated. The rankings of A to C are the passing levels.

### <Evaluation standards>

A: (Standard deviation/average)<5%
B: 5%≤(standard deviation/average)<10%
C: 10%≤(standard deviation/average)<20%
D: 20%≤(standard deviation/average)<50%
E: 50%≤(standard deviation/average)

### - Production examples of all-solid state secondary battery -

The solid electrolyte composition S-1 was applied onto a TEFLON (registered trademark) sheet using an applicator (trade name: SA-201 Baker type applicator, manufactured by Tester Sangyo Co., Ltd.) and dried at 120°C for 0.1 hours. This was attached to the electrode sheet for a positive electrode PS-1 obtained above, and the TEFLON sheet was removed. The electrode sheet for a negative electrode NS-1 obtained above was at the solid electrolyte layer side, and the laminate was pressed using a pressing machine at 300 MPa for five seconds.

As illustrated in Fig. 3, a disc-like piece having a diameter of 14.5 mm was cut out from the electrode sheet for an all-solid state secondary battery 16 manufactured above, was put into a stainless steel 2032-type coin case 16 which a spacer and a washer (both are not illustrated in Fig. 3) were combined into, and was swaged with a force of eight newtons (N) using a torque wrench, thereby manufacturing an all-solid state secondary battery 18 having a layer constitution illustrated in Fig. 1.

### <Evaluation>

The following voltage evaluation was carried out on the all-solid state secondary batteries of the examples and the comparative examples produced above. The evaluation results are shown in Table 4.

The battery voltage of the all-solid state secondary battery produced above was measured using a charging and discharging evaluation device "TOSCAT-3000 (trade name)" manufactured by Toyo System Co., Ltd.

The coin battery was charged at a current density of 2 A/m² until the battery voltage reached 4.2 V, and, once the battery voltage reached 4.2 V, the coin battery was charged with constant voltage until the current density reached less than 0.2 A/m². The coin battery was discharged at a current density of 2 A/m² until the battery voltage reached 3.0 V. The above-described process was considered as one cycle, the process was repeated three cycles, and the battery voltage after a 5 mAh/g discharging in the third cycle was read and evaluated using the following standards. Meanwhile, the rankings of A to C are the passing levels.

<Evaluation standards>
A: 4.0 V or more
B: 3.9 V or more and less than 4.0 V
C: 3.8 V or more and less than 3.9 V
D: 3.7 V or more and less than 3.8 V
E: Less than 3.7 V

**[Table 4]**

| Battery | Positive electrode layer | | | Solid electrolyte layer | | | Negative electrode layer | | | Voltage |
|---|---|---|---|---|---|---|---|---|---|---|
| | Type | Layer thickness average | Layer thickness uniformity | Type | Layer thickness average | Layer thickness uniformity | Type | Layer thickness average | Layer thickness uniformity | |
| 101 | PS-1 | 162 | B | S-1 | 199 | A | NS-1 | 152 | C | C |
| 102 | PS-2 | 144 | A | S-2 | 184 | A | NS-2 | 158 | A | A |
| 103 | PS-3 | 160 | A | S-3 | 212 | B | NS-3 | 167 | B | B |
| 104 | PS-4 | 139 | B | S-4 | 210 | A | NS-4 | 175 | A | A |
| 105 | PS-5 | 140 | A | S-5 | 196 | A | NS-5 | 163 | B | A |
| 106* | PS-6 | 153 | B | S-6 | 201 | A | NS-6 | 157 | B | B |
| 107 | PS-7 | 163 | A | S-7 | 188 | B | NS-7 | 167 | A | A |
| 108 | PS-8 | 153 | A | S-8 | 183 | A | NS-8 | 160 | A | A |
| 109 | PS-9 | 160 | A | S-9 | 205 | A | NS-9 | 157 | A | A |
| 110 | PS-10 | 131 | B | S-10 | 182 | A | NS-10 | 161 | A | A |
| 111 | PS-11 | 150 | A | S-11 | 208 | A | NS-11 | 154 | B | A |
| 112* | PS-12 | 156 | A | S-12 | 180 | B | NS-12 | 156 | B | B |
| 113* | PS-13 | 151 | B | S-13 | 219 | A | NS-13 | 154 | A | A |
| 114 | PS-14 | 166 | A | S-14 | 215 | A | NS-14 | 171 | B | A |
| 115 | PS-15 | 169 | A | S-15 | 210 | A | NS-15 | 173 | A | A |
| 116 | PS-16 | 144 | A | S-16 | 196 | A | NS-16 | 158 | A | A |
| 117 | PS-17 | 149 | A | S-17 | 180 | A | NS-17 | 170 | A | A |
| 118 | PS-18 | 150 | A | S-18 | 200 | A | NS-16 | 165 | A | A |
| 119 | PS-19 | 150 | A | S-19 | 200 | A | NS-17 | 165 | A | A |
| c11 | HPS-1 | 160 | E | HS-1 | 186 | E | HNS-1 | 151 | E | E |
| c12 | HPS-2 | 142 | E | HS-2 | 215 | E | HNS-2 | 164 | D | C |
| c13 | HPS-3 | 138 | C | HS-3 | 203 | D | HNS-3 | 159 | C | E |
| c14 | HPS-4 | 167 | D | HS-4 | 210 | E | HNS-4 | 179 | E | D |

| | | | | | | | | | | |
|---|---|---|---|---|---|---|---|---|---|---|
| *Reference Example | | | | | | | | | | |

The content proportions of the dispersion medium (C) in the sheets constituting the respective layers were 1 ppm or more and 10,000 ppm or less in the total mass in all of the sheets. Meanwhile, the content proportions were measured using the above-described method.

As is clear from the results of battery Nos. c11 to c14 in Table 4, all-solid state secondary batteries produced using the composition not containing the alicyclic compound (C1) failed in at least one of the layer thickness uniformity or the voltage.

In contrast, as is clear from the results of battery Nos. 101 to 119, sheets for an all-solid state secondary battery produced using the solid electrolyte composition of the present invention were excellent in terms of the layer thickness uniformity. The all-solid state secondary battery of the present invention in which a sheet for an all-solid state secondary battery having a high ion conductivity was used has a high battery voltage.

### Explanation of References

1: negative electrode collector
2: negative electrode active material layer
3: solid electrolyte layer
4: positive electrode active material layer
5: positive electrode collector
6: operation portion
10: all-solid state secondary battery
11: upper portion-supporting plate
12: lower portion-supporting plate
13: coin-type jig
14: coin case
15: solid electrolyte-containing sheet
S: screw
16: 2032-type coin case
17: electrode sheet for all-solid state secondary battery
18: all-solid state secondary battery

## Claims

1. A solid electrolyte composition comprising:
an inorganic solid electrolyte (A) having conductivity of ions of metals belonging to Group I or II of the periodic table;
a binder (B); and
a dispersion medium (C),
wherein the dispersion medium (C) includes an alicyclic compound (C1) optionally comprising halogen atoms and not comprising any other heteroatoms, and a boiling point of the alicyclic compound (C1) at 760 mmHg is 110°C or higher and 180°C or lower.

2. The solid electrolyte composition according to claim 1,
wherein the alicyclic compound (C1) includes no unsaturated bond in a ring and has a monocyclic shape.

3. The solid electrolyte composition according to claim 1 or 2,
wherein the alicyclic compound (C1) has at least one selected from the group consisting of an alkyl group, an alkenyl group, and an alkynyl group each having two or more carbon atoms, and a halogen atom, and
wherein the alicyclic compound (C1) in the dispersion medium (C) is preferably a compound of a six to eight-membered ring.

4. The solid electrolyte composition according to any one of claims 1 to 3,
wherein a proportion of the alicyclic compound (C1) in the dispersion medium (C) is 20% by mass to 100% by mass.

5. The solid electrolyte composition according to any one of claims 1 to 4,
wherein the inorganic solid electrolyte (A) is a sulfide-based inorganic solid electrolyte.

6. The solid electrolyte composition according to any one of claims 1 to 5,
wherein the binder (B) is at least one selected from the group consisting of an acrylic resin, a polyurethane resin, a polyurea resin, a polyimide resin, a fluorine-containing resin, and a hydrocarbon-based thermoplastic resin, and
wherein the binder (B) preferably has a polar group.

7. The solid electrolyte composition according to any one of claims 1 to 6,
wherein the binder (B) is particles insoluble in the dispersion medium (C), and
wherein the binder (B) is preferably nanoparticles having an average particle diameter of 10 to 1,000 nm.

8. The solid electrolyte composition according to any one of claims 1 to 7, further comprising:
an active material (D).

9. The solid electrolyte composition according to any one of claims 1 to 8, further comprising:
a conductive auxiliary agent.

10. The solid electrolyte composition according to any one of claims 1 to 9, further comprising:
a lithium salt.

11. The solid electrolyte composition according to any one of claims 1 to 10, further comprising:
an ionic liquid.

12. A solid electrolyte-containing sheet comprising:
an inorganic solid electrolyte (A) having conductivity of ions of metals belonging to Group I or II of the periodic table;
a binder (B); and
1 ppm or more and 10,000 ppm or less of a dispersion medium (C) in a total mass,
wherein the dispersion medium (C) includes an alicyclic compound (C1) optionally comprising halogen atoms and not comprising any other heteroatoms, and a boiling point of the alicyclic compound (C1) at 760 mmHg is 110°C or higher and 180°C or lower.

13. A method for manufacturing a solid electrolyte-containing sheet, comprising:
a step of applying the solid electrolyte composition according to any one of claims 1 to 11 onto a base material and forming a coated film.

14. An all-solid state secondary battery comprising:
a positive electrode active material layer;
a negative electrode active material layer; and
a solid electrolyte layer,
wherein at least one of the positive electrode active material layer, the negative electrode active material layer, or the solid electrolyte layer is the solid electrolyte-containing sheet according to claim 12.

15. A method for manufacturing an all-solid state secondary battery,
wherein the all-solid state secondary battery is manufactured using the manufacturing method according to claim 13.

## Patentansprüche

1. Festelektrolytzusammensetzung, umfassend:
einen anorganischen Festelektrolyt (A) mit Leitfähigkeit von Metallionen der Gruppe I oder II des Periodensystems;
ein Bindemittel (B); und
ein Dispersionsmedium (C),
wobei das Dispersionsmedium (C) eine alicyclische Verbindung (C1) enthält, die optional ein Halogenatom umfasst und keine anderen Heteroatome umfasst, und wobei ein Siedepunkt der alycyclischen Verbindung (C1) bei 760 mmHg 110°C oder höher und 180 °C oder niedriger ist.

2. Festelektrolytzusammensetzung gemäß Anspruch 1, wobei die alicyclische Verbindung (C1) keine ungesättigte Bindung im Ring enthält und eine monocyclische Struktur aufweist.

3. Festelektrolytzusammensetzung gemäß Anspruch 1 oder 2,
wobei die alicyclische Verbindung (C1) mindestens eine ausgewählt aus der Gruppe bestehend aus einer Alkylgruppe, einer Alkenylgruppe und einer Alkenylgruppe, die jeweils zwei oder mehr Kohlenstoffatome aufweisen, und einem Halogenatom aufweist, und
wobei die alicyclische Verbindung (C1) in dem Dispersionsmedium (C) bevorzugt eine Verbindung mit einem sechs- bis achtgliedrigen Ring ist.

4. Festelektrolytzusammensetzung gemäß einem der Ansprüche 1 bis 3,
wobei ein Anteil der alicyclischen Verbindung (C1) in dem Dispersionsmedium (C) 20 Massen-% bis 100 Massen-% beträgt.

5. Festelektrolytzusammensetzung gemäß einem der Ansprüche 1 bis 4,
wobei der anorganische Festelektrolyt (A) ein anorganischer Festelektrolyt auf Sulfidbasis ist.

6. Festelektrolytzusammensetzung gemäß einem der Ansprüche 1 bis 5,
wobei das Bindemittel (B) mindestens eines ausgewählt aus der Gruppe bestehend aus einem Acrylharz, einem Polyurethanharz, einem Polyharnstoffharz, einem Polyimidharz, einem Fluor-haltigen Harz und einem thermoplastischen Harz auf Kohlenwasserstoffbasis ist, und
wobei das Bindemittel (B) bevorzugt eine polare Gruppe aufweist.

7. Festelektrolytzusammensetzung gemäß einem der Ansprüche 1 bis 6,
wobei das Bindemittel (B) Partikel sind, die im Dispersionsmedium (C) unlöslich sind, und
wobei das Bindemittel (B) bevorzugt Nanopartikel mit einem durchschnittlichen Partikeldurchmesser von 10 bis 1.000 nm sind.

8. Festelektrolytzusammensetzung gemäß einem der Ansprüche 1 bis 7, ferner umfassend:
ein Aktivmaterial (D).

9. Festelektrolytzusammensetzung gemäß einem der Ansprüche 1 bis 8, ferner umfassend:
ein leitfähiges Hilfsmittel.

10. Festelektrolytzusammensetzung gemäß einem der Ansprüche 1 bis 9, ferner umfassend:
ein Lithiumsalz.

11. Festelektrolytzusammensetzung gemäß einem der Ansprüche 1 bis 10, ferner umfassend:
eine ionische Flüssigkeit.

12. Festelektrolyt-enthaltende Folie, umfassend:
einen anorganischen Festelektrolyt (A) mit Leitfähigkeit von Metallionen der Gruppe I oder II des Periodensystems;
ein Bindemittel (B); und
1 ppm oder mehr und 10.000 ppm oder weniger eines Dispersionsmediums (C) bezogen auf die Gesamtmasse,
wobei das Dispersionsmedium (C) eine alicyclische Verbindung (C1) enthält, die optional ein Halogenatom umfasst und keine anderen Heteroatome umfasst, und wobei ein Siedepunkt der alycyclischen Verbindung (C1) bei 760 mmHg 110 °C oder höher und 180 °C oder niedriger ist.

13. Verfahren zur Herstellung einer Festelektrolytenthaltenden Folie, umfassend:
einen Schritt des Aufbringens einer Festelektrolytzusammensetzung gemäß einem der Ansprüche 1 bis 11 auf ein Basismaterial und des Bildens eines beschichteten Films.

14. Festkörpersekundärbatterie, umfassend:
eine Positivelektrodenaktivmaterialschicht;
eine Negativelektrodenaktivmaterialschicht; und
eine Festelektrolytschicht,
wobei mindestens eine der Positivelektrodenaktivmaterialschicht, der Negativelektrodenaktivmaterialschicht oder der Festelektrolytschicht die Festelektrolyt-enthaltende Folie gemäß Anspruch 12 ist.

15. Verfahren zur Herstellung einer Festkörpersekundärbatterie,
wobei die Festkörpersekundärbatterie unter Verwendung des Herstellungsverfahrens gemäß Anspruch 13 hergestellt wird.

## Revendications

1. Composition électrolytique solide comprenant :
un électrolyte solide inorganique (A) ayant une conductivité d'ions de métaux appartenant au Groupe I ou II du tableau périodique ;
un liant (B) ; et
un milieu de dispersion (C),
dans laquelle le milieu de dispersion (C) comporte un composé alicyclique (C1) comprenant optionnellement des atomes d'halogène et ne comprenant aucun autre hétéroatome, et un point d'ébullition du composé alicyclique (C1) à 760 mmHg est de 110°C ou supérieur et de 180°C ou inférieur.

2. La composition électrolytique solide selon la revendication 1,
dans laquelle le compose alicyclique C1) ne comporte pas de liaison insaturée dans un cycle et a une forme monocyclique.

3. La composition électrolytique solide selon la revendication 1 ou 2,
dans laquelle le compose alicyclique (C1) a au moins l'un choisi parmi le groupe constitué d'un groupe alkyle, un groupe alcényle, un groupe alkynyle chacun ayant dex ou plus de deux atomes de carbone, et un atome d'halogène, et
dans laquelle le composé alicyclique (C1) dans le milieu de dispersion (C) est préférablement un composé cyclique ayant de six à huit chaînons.

4. La composition électrolytique solide selon l'une quelconque des revendications 1 à 3,
dans laquelle une proportion du compose alicyclique (C1) dans le milieu de dispersion (C) est de 20% en masse à 100% en masse.

5. La composition électrolytique solide selon l'une quelconque des revendications 1 à 4,
dans laquelle l'électrolyte solide inorganique (A) est un électrolyte solide inorganique à base de sulfure.

6. La composition électrolytique solide selon l'une quelconque des revendications 1 à 5,
dans laquelle le liant (B) est au moins l'un choisi parmi le groupe constitué d'une résine acrylique, une résine polyuréthane, une résine polyurée, une résine polyimide, une résine contenant du fluor, et un résine thermoplastique à base d'hydrocarbone, et
dans laquelle le liant (B) a préférablement un groupe polaire.

7. La composition électrolytique solide selon l'une quelconque des revendications 1 à 6,
dans laquelle le liant (B) est des particules insolubles dans le milieu de dispersion (C), et
dans laquelle le liant (B) est préférablement des nanoparticules ayant un diamètre de particule moyen de 10 à 1000 nm.

8. La composition électrolytique solide selon l'une quelconque des revendications 1 à 7, comprenant en outre :
un matériau actif (D).

9. La composition électrolytique solide selon l'une quelconque des revendications 1 à 8, comprenant en outre :
un agent auxiliaire conducteur.

10. La composition électrolytique solide selon l'une quelconque des revendications 1 à 9, comprenant en outre :
un sel de lithium.

11. La composition électrolytique solide selon l'une quelconque des revendications 1 à 10, comprenant en outre :
un liquide ionique.

12. Feuille contenant un électrolyte solide comprenant :
un électrolyte slide inorganique (A) ayant une conductivité d'ions de métaux appartenant au Groupe I ou II du tableau périodique ;
un liant (B) ; et
1 ppm ou plus et 10000 ppm ou moins d'un milieu de dispersion (C) dans une masse totale,
dans laquelle le milieu de dispersion (C) comporte un composé alicyclique (C1) comprenant optionnellement des atomes d'halogène et ne comprenant aucun hétéroatome, et un point d'ébullition du composé alicyclique (C1) à 760 mmHg est de 110°C ou supérieur et 180°C ou inférieur.

13. Procédé de fabrication d'une feuille contenant un électrolyte solide, comprenant :
une étape d'application de la composition d'électrolyte solide selon l'une quelconque des revendications 1 à 11 sur un matériau de base et formation d'un film de revêtement.

14. Batterie secondaire à l'état solide comprenant :
une couche de matériau actif d'électrode positive ;
une couche de matériau actif d'électrode négative ; et
une couche électrolytique solide,
dans laquelle au moins l'une de la couche de matériau actif d'électrode positive, de la couche de matériau actif d'électrode négative, ou de la couche électrolytique solide est la feuille contenant un électrolyte solide selon la revendication 12.

15. Procédé de fabrication d'une batterie secondaire à l'état solide,
dans lequel la batterie secondaire à l'état solide est fabriquée en utilisant le procédé de fabrication selon la revendication 13.
